# EUROPEAN PATENT SPECIFICATION

(11) **EP 4 332 747 B1**
(45) Date of publication and mention of the grant of the patent: **04.03.2026**
(21) Application number: 23189399.1
(22) Date of filing: 03.08.2023
(51) Int. Cl.: G06F 3/06, H04L 67/568, G06F 13/40

(54) **SYSTEMS AND METHODS FOR INTEGRATING A COMPUTE RESOURCE WITH A STORAGE DEVICE**
SYSTEME UND VERFAHREN ZUR INTEGRATION EINER RECHENRESSOURCE MIT EINER SPEICHERVORRICHTUNG
SYSTÈMES ET PROCÉDÉS D'INTÉGRATION D'UNE RESSOURCE INFORMATIQUE AVEC UN DISPOSITIF DE STOCKAGE

(30) Priority: 02.09.2022 US 202263403679 P; 02.09.2022 US 202263403682 P; 02.12.2022 US 202218074360; 10.02.2023 US 202318108575
(43) Date of publication of application: 06.03.2024
(73) Proprietor: Samsung Electronics Co., Ltd., Suwon-si, Gyeonggi-do 16677 (KR)
(72) Inventor: KACHARE, Ramdas, San Jose, CA 95134 (US); ZHAO, Dongwan, San Jose, CA 95134 (US); LAU, Jimmy, San Jose, CA 95134 (US); CARGNINI, Luis Vitorio, San Jose, CA 95134 (US); FINDLEY, Joseph, San Jose, CA 95134 (US)
(74) Representative: Kuhnen & Wacker Patent- und Rechtsanwaltsbüro PartG mbB

(56) References cited:
- US-A1- 2018 359 318
- US-A1- 2021 117 242
- US-B1- 9 608 936

## Description

### FIELD

The disclosure relates generally to storage devices, and more particularly to a device to integrate a storage device with a computational storage unit.

### BACKGROUND

US 2018/359318 A1 discloses a method of transferring data to an end user via a content distribution network using an nonvolatile memory express over fabrics, NVMe-oF, device, the method including receiving a read request at the NVMe-oF device, translating a logical address corresponding to the data to a physical address, fetching the data from a flash storage of the NVMe-oF device, processing the data with a GPU that is either embedded in the NVMe-oF device, or on a same chassis as the NVMe-oF device, and transferring the data.

US 2021/117242 A1 discloses an Infrastructure Processing Unit, IPU, that comprises: interface circuitry to provide a communicative coupling with a platform; network interface circuitry to provide a communicative coupling with a network medium; and circuitry to expose infrastructure services to be accessed by microservices for function composition.

With the increase in capacity offered by storage devices, applications may process more and more data. Transferring large amounts of data from the storage device to main memory for an application to process may require significant amounts of time. In addition, having the host processor execute the commands to process that data may impose a burden on the host processor.

A need remains to improve the processing data.

### SUMMARY

The invention is set out in the appended claims. Embodiments of the invention include a multi-function device. The multi-function device may support storage devices and/or computational storage units. The computational storage units may support processing of data on the storage devices. One or more computational storage units may be hidden from the host.

### BRIEF DESCRIPTION OF THE DRAWINGS

The drawings described below are examples of how embodiments of the disclosure may be implemented, and are not intended to limit embodiments of the disclosure. Individual embodiments of the disclosure may include elements not shown in particular figures and/or may omit elements shown in particular figures. The drawings are intended to provide illustration and may not be to scale.
FIG. 1 shows a machine including a multi-function device to support modular storage devices and/or computational storage units, according to embodiments of the disclosure.
FIG. 2 shows details of the machine of FIG. 1, according to embodiments of the disclosure.
FIG. 3 shows details of the multi-function device of FIG. 1, according to embodiments of the disclosure.
FIG. 4 shows details of the storage device of FIG. 1, according to embodiments of the disclosure.
FIG. 5A shows a first example implementation of the computational storage unit of FIG. 1, according to embodiments of the disclosure.
FIG. 5B shows a second example implementation of the computational storage unit of FIG. 1, according to embodiments of the disclosure.
FIG. 5C shows a third example implementation of the computational storage unit of FIG. 1, according to embodiments of the disclosure.
FIG. 5D shows a fourth example implementation of the computational storage unit of FIG. 1, according to embodiments of the disclosure.
FIG. 6 shows a flowchart of an example procedure for using the multi-function device of FIG. 1 to deliver requests to the storage device of FIG. 1 and/or the computational storage unit of FIG. 1, according to embodiments of the disclosure.
FIG. 7 shows a flowchart of an example procedure for using the multi-function device of FIG. 1 to identify exposed functions of the storage device of FIG. 1 and/or the computational storage unit of FIG. 1, according to embodiments of the disclosure.
FIG. 8 shows a flowchart of an example procedure for using the asynchronous buffers of FIG. 3, according to embodiments of the disclosure.
FIG. 9 shows a flowchart of an example procedure for replacing the computational storage unit of FIG. 1 with another computational storage unit, according to embodiments of the disclosure.
FIG. 10 shows a flowchart of an example procedure for using the multi-function device of FIG. 1 to deliver requests between devices attached to the multi-function device of FIG. 1, according to embodiments of the disclosure.
FIG. 11A shows a flowchart of an example procedure for devices attached to the multi-function device of FIG. 1 to share data, according to embodiments of the disclosure.
FIG. 11B continues the flowchart of FIG. 11A of the example procedure for devices attached to the multi-function device of FIG. 1 to share data, according to embodiments of the disclosure.
FIG. 12 shows another embodiment of the multi-function device of FIG. 1, according to embodiments of the disclosure.
FIG. 13 shows details of a list of device configurations that may be used by the multi-function device of FIG. 1, according to embodiments of the disclosure.
FIG. 14 shows yet another embodiment of the multi-function device of FIG. 1, according to embodiments of the disclosure.
FIG. 15 shows the multi-function device of FIG. 1 receiving a request from a source and delivering the request to a target, according to embodiments of the disclosure.
FIG. 16 shows a flowchart of an example procedure for exposing the devices attached to the multi-function device of FIG. 1 to the processor of FIG. 1, according to embodiments of the disclosure.
FIG. 17 shows a flowchart of an example procedure for the multi-function device of FIG. 1 to determine how a computational storage unit is available, according to embodiments of the disclosure.
FIG. 18 shows a flowchart of an example procedure for the multi-function device of FIG. 1 to determine which devices to expose to the processor of FIG. 1, according to embodiments of the disclosure.
FIG. 19 shows a flowchart of an example procedure for the multi-function device of FIG. 1 to deliver messages between connected devices, according to embodiments of the disclosure.
FIG. 20 shows a flowchart of an example procedure for the multi-function device of FIG. 1 to determine an address range of the buffer of FIGs. 3, 12, and 14 from the processor of FIG. 1, according to embodiments of the disclosure.
FIG. 21 shows a flowchart of an example procedure for the devices attached to the multi-function device of FIG. 1 to access data from the buffer of FIGs. 3, 12, and 14, according to embodiments of the disclosure.
FIG. 22 shows a flowchart of an example procedure for the data processor of FIGs. 3, 12, and 14 to process data in the buffer of FIGs. 3, 12, and 14, according to embodiments of the disclosure.
FIG. 23 shows a flowchart of an example procedure for the multi-function device of FIG. 1 to determine whether to deliver a request to a target device or to the buffer of FIGs. 3, 12, and 14, according to embodiments of the disclosure.
FIG. 24 shows a flowchart of an example procedure for the multi-function device of FIG. 1 to process a new device attached to the multi-function device of FIG. 1, according to embodiments of the disclosure.

### DETAILED DESCRIPTION

Reference will now be made in detail to embodiments of the disclosure, examples of which are illustrated in the accompanying drawings. In the following detailed description, numerous specific details are set forth to enable a thorough understanding of the disclosure. It should be understood, however, that persons having ordinary skill in the art may practice the disclosure without these specific details. In other instances, well-known methods, procedures, components, circuits, and networks have not been described in detail so as not to unnecessarily obscure aspects of the embodiments.

It will be understood that, although the terms first, second, etc. may be used herein to describe various elements, these elements should not be limited by these terms. These terms are only used to distinguish one element from another. For example, a first module could be termed a second module, and, similarly, a second module could be termed a first module, without departing from the scope of the disclosure.

The terminology used in the description of the disclosure herein is for the purpose of describing particular embodiments only and is not intended to be limiting of the disclosure. As used in the description of the disclosure and the appended claims, the singular forms "a", "an", and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. The components and features of the drawings are not necessarily drawn to scale.

As storage devices increase in capacity, the amount of data to be processed by an application may also increase. The time required to transfer such data between the storage device and main memory may increase, potentially slowing down execution of the application. In addition, having the host processor execute the commands may place a burden on the host processor, which may reduce the cycles available for the host processor to execute other commands.

Embodiments of the disclosure address these problems with a multi-function device. The multi-function device may support one or more storage devices and one or more computational storage units. One or more of the computational storage units may be hidden from the host processor, and used internally by the storage devices and/or the other computational storage units. The multi-function device may expose to the host processor the storage devices and/or computational storage units that are not hidden from the host processor in a manner that makes it appear as though the host processor is directly accessing the storage devices and/or computational storage units.

Computational storage units may be connected to the multi-function device via a connector, or they may be integrated into the multi-function device. If the storage units or the computational storage units are connected to the multi-function device, they may be replaceable.

Storage devices and computational storage units may share data using a buffer. By using the buffer, data may be shared without host management or involvement. The buffer may act like a shared memory, supporting multiple storage devices and/or computational storage units accessing the data sequentially or in parallel.

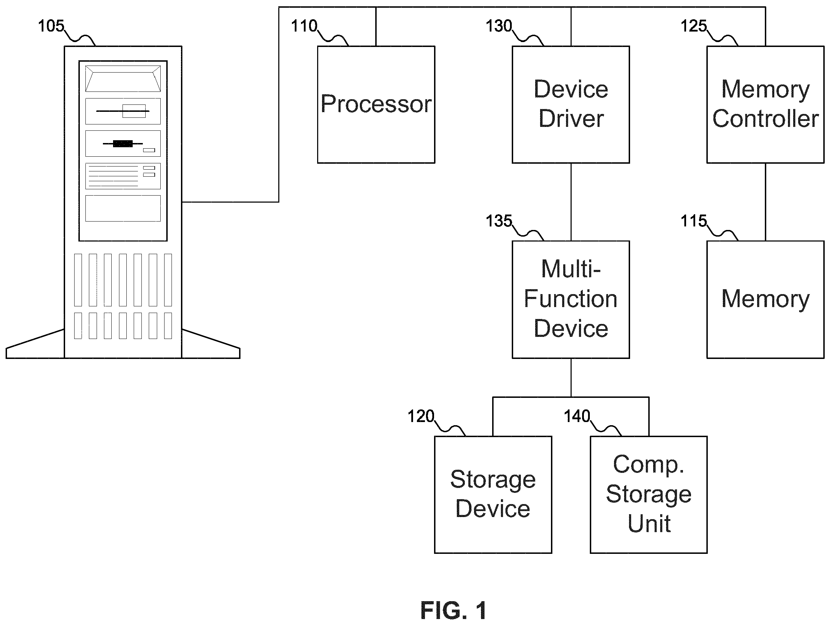

FIG. 1 shows a machine including an accelerator to reduce data dimensionality and perform calculations, according to embodiments of the disclosure. In FIG. 1, machine 105, which may also be termed a host or a system, may include processor 110, memory 115, and storage device 120. Processor 110 may be any variety of processor. Processor 110 may also be called a host processor. (Processor 110, along with the other components discussed below, are shown outside the machine for ease of illustration: embodiments of the disclosure may include these components within the machine.) While FIG. 1 shows a single processor 110, machine 105 may include any number of processors, each of which may be single core or multi-core processors, each of which may implement a Reduced Instruction Set Computer (RISC) architecture or a Complex Instruction Set Computer (CISC) architecture (among other possibilities), and may be mixed in any desired combination.

Processor 110 may be coupled to memory 115. Memory 115 may be any variety of memory, such as flash memory, Dynamic Random Access Memory (DRAM), Static Random Access Memory (SRAM), Persistent Random Access Memory, Ferroelectric Random Access Memory (FRAM), or Non-Volatile Random Access Memory (NVRAM), such as Magnetoresistive Random Access Memory (MRAM) etc. Memory 115 may be a volatile or non-volatile memory, as desired. Memory 115 may also be any desired combination of different memory types, and may be managed by memory controller 125. Memory 115 may be used to store data that may be termed "short-term": that is, data not expected to be stored for extended periods of time. Examples of short-term data may include temporary files, data being used locally by applications (which may have been copied from other storage locations), and the like.

Processor 110 and memory 115 may also support an operating system under which various applications may be running. These applications may issue requests (which may also be termed commands) to read data from or write data to either memory 115. When storage device 120 is used to support applications reading or writing data via some sort of file system, storage device 120 may be accessed using device driver 130. While FIG. 1 shows one storage device 120, there may be any number (one or more) of storage devices in machine 105. Storage device 120 may support any desired protocol or protocols, including, for example, the Non-Volatile Memory Express (NVMe) protocol or a cache coherent interconnect protocol, such as the Compute Express Link (CXL) protocol.

While FIG. 1 uses the generic term "storage device", embodiments of the disclosure may include any storage device formats that may benefit from the use of computational storage units, examples of which may include hard disk drives and Solid State Drives (SSDs). Any reference to "SSD" below should be understood to include such other embodiments of the disclosure.

Machine 105 may also include multi-function device 135 (which may also be termed an accelerator or a device). As discussed below, multi-function device 135 may support connections to storage device 120 and computational storage unit 140, but present to processor 110 as though storage device 120 and computational storage unit 140 were a single device. Multi-function device 135 may enable modularity in storage device 120 and/or computational storage unit 140, in that storage device 120 and/or computational storage unit 140 may be added or replaced without necessarily having to replace other components connected to multi-function device 135.

Multi-function device 135 may be implemented using any desired hardware. For example, multi-function device 135, or components thereof, may be implemented using a Field Programmable Gate Array (FPGA), an Application-Specific Integrated Circuit (ASIC), a central processing unit (CPU), a System-on-a-Chip (SoC), a graphics processing unit (GPU), a general purpose GPU (GPGPU), a data processing unit (DPU), a neural processing unit (NPU), a Network Interface Card (NIC), or a tensor processing unit (TPU), to name a few possibilities. Multi-function device 135 may also use a combination of these elements to implement multi-function device 135.

Computational storage unit 140 may take any desired form. Like multi-function device 135, computational storage unit 140 may be implemented using an FPGA, an ASIC, a CPU, an SoC, a GPU, a GPGPU, a DPU, an NPU, an NIC, or a TPU, to name a few possibilities. Computational storage unit 140 may implement any desired function or functions. For example, computational storage unit 140 may implement a specific-purpose accelerator, designed to perform near-data processing. Computational storage unit 140 may also be a general-purpose accelerator, designed to receive a program from machine 140 to perform near-data processing. Computational storage unit 140 may also implement other functions, such as encryption and/or decryption, compression and/or decompression, or network interfacing, among other possibilities.

A particular example of encryption and/or decryption that may be performed using computational storage unit 140 may be Fully Homomorphic Encryption (FHE). FHE may support analyzing encrypted data without decrypting it. FHE may thus protect the privacy and confidentiality of customer data. When computational storage unit 140 includes a circuit to implement FHE, machine 105 may download instructions into the engine of the FHE circuit to implement the desired processing, which may then be performed near to the data, without transferring the data into memory 115.

While FIG. 1 shows device driver 130, which is described above as supporting access to storage device 120, machine 105 may also include device drivers (not shown) for computational storage unit 140 and/or multi-function device 135. That is, embodiments of the disclosure may support device driver 130 supporting any or all of storage device 120, computational storage unit 140, or multi-function device 135, and embodiments of the disclosure may include additional device drivers to support any or all combinations of these components.

In some embodiments of the disclosure, device driver 130 (and other device drivers, such as to support computational storage unit 140) may provide application programming interfaces (APIs) to access storage device 120 and/or computational storage unit 140. By supporting existing device drivers, existing applications may be executed by processor 110 without change to the applications (although embodiments of the disclosure may involve modifications to other elements in a software stack). For example, a TPU may have a TPU device driver, or a GPU may have a GPU device driver: applications that access functions of the TPU or the GPU may continue to use the existing TPU device driver or GPU device driver. In addition, by supporting existing device drivers, computational storage unit 140 may be any computational storage unit, even if manufactured by a different manufacturer from storage device 120 and/or multi-function device 135. Further, in some embodiments of the disclosure, device driver 130 (or other device drivers) may be proprietary.

Embodiments of the disclosure may include any desired mechanism to communicate with storage device 120 and/or computational device 140. For example, storage device 120 and/or computational device 140 may connect to a bus, such as a Peripheral Component Interconnect Express (PCIe) bus, or storage device 120 and/or computational device 140 may include Ethernet interfaces or some other network interface. Other potential interfaces and/or protocols to storage device 120 and/or computational device 140 may include NVMe, NVMe over Fabrics (NVMe-oF), CXL, Remote Direct Memory Access (RDMA), Transmission Control Protocol/Internet Protocol (TCP/IP), Universal Flash Storage (UFS), embedded MultiMediaCard (eMMC), InfiniBand, Serial Attached Small Computer System Interface (SCSI) (SAS), Internet SCSI (iSCSI), and Serial AT Attachment (SATA), among other possibilities.

Machine 105 may include a range of addresses in memory 115 that are addressable by processor 110, storage device 120, and/or computational storage unit 140. In some embodiments of the disclosure, processor 110 may allocate subsets of this address range that may be associated with commands to be sent to storage device 120 and/or computational storage unit 140. In addition, processor 110 may allocate a subset of this address range that may be associated with commands for peer-to-peer communication between storage device 120 and computational storage unit 140. That is, by associating a command with a particular address in memory 115, it may be possible to determine whether the command is intended for storage device 120, computational storage unit 140, or for transferring data between storage device 120 and computational storage unit 140. Note that memory 115 might not include enough memory to include such a physical address, but memory 115 is not necessarily required to actually enough memory to include such an address. For example, memory 115 might include 2 gigabytes (GB) of memory, but might support addressing up to 4 GB of memory. A subset of addresses, such as those between 2 GB and 3 GB, might be used to identify commands for peer-to-peer communication, even though memory 115 might not be able to process a request for those particular addresses. Multi-function device 135 may identify such commands based on the address assigned to the command, and may intercept such commands for processing.

Processor 110, memory 115, storage device 120, memory controller 125, multi-function device 135, and computational storage unit 140 may be connected in any desired manner, using any desired links and any desired protocols. For example, multi-function device 135 may connect to processor 110, memory 115, and memory controller 125 using a PCIe bus and using the NVMe protocol, but other busses or links and other protocols may be used. Storage device 120 and computational storage unit 140 may similarly connect to multi-function device 135 using a PCIe bus and using the NVMe protocol, but other busses or links (for example, Small Computer System Interface (SCSI), Parallel AT Attachment (known as IDE), HyperTransport, Infiniband, or others) and other protocols may be used. Nor is it required that the same busses, links, or protocols be used: storage device 120 and computational storage unit 140 might connect to multi-function device 135 using other busses, links, or protocols (and may each use different busses, links, or protocols). Embodiments of the disclosure are intended to include any and all variations regarding how the components of FIG. 1 are connected and how they communicate with each other.

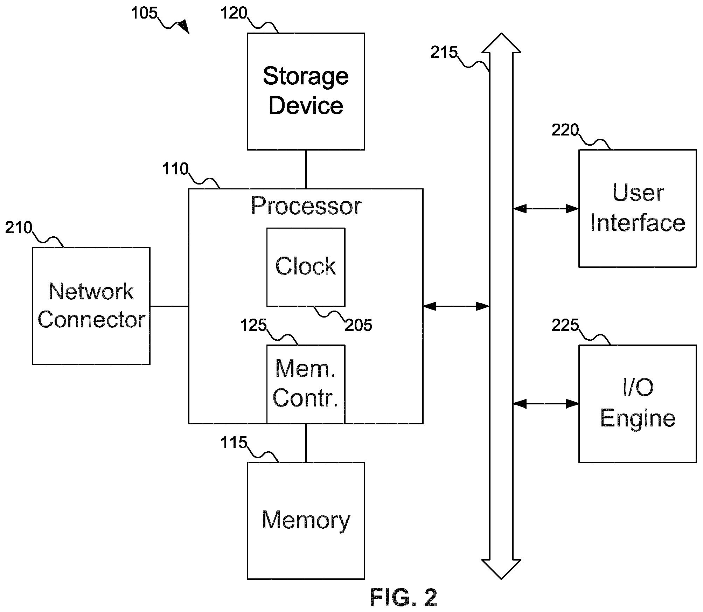

FIG. 2 shows details of machine 105 of FIG. 1, according to embodiments of the disclosure. In FIG. 2, typically, machine 105 includes one or more processors 110, which may include memory controllers 120 and clocks 205, which may be used to coordinate the operations of the components of the machine. Processors 110 may also be coupled to memories 115, which may include random access memory (RAM), read-only memory (ROM), or other state preserving media, as examples. Processors 110 may also be coupled to storage devices 125, and to network connector 210, which may be, for example, an Ethernet connector or a wireless connector. Processors 110 may also be connected to buses 215, to which may be attached user interfaces 220 and Input/Output (I/O) interface ports that may be managed using I/O engines 225, among other components. Example components that may be managed using user interfaces 220 and I/O engines 225 may include keyboard, mouse, printer, and display screen, among other possibilities.

FIG. 2 shows an alternate diagram of some of the components shown in FIG. 1: components not shown in FIG. 2 (for example, multi-function device 135 of FIG. 1) may also be included. FIG. 2 is not intended to differ from FIG. 1, but merely to present an alternative view of how the various components shown might be arranged. In addition, other components may be added: for example, other components may connect to buses 215.

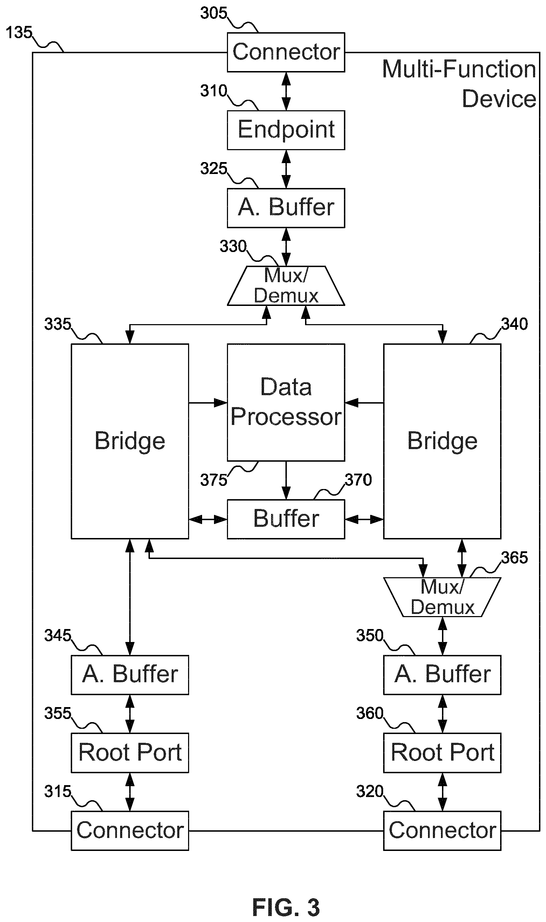

FIG. 3 shows details of multi-function device 135 of FIG. 1, according to embodiments of the disclosure. In FIG. 3, multi-function device 135 may include connector 305. Connector 305 may provide a connection to a bus that may be used to communicate with processor 110 of FIG. 1. For example, connector 305 may provide a connection to a PCIe bus, but other busses may be used as well.

Endpoint 310 may be connected to (or implemented as part of) connector 305. Endpoint 310 may function as an endpoint for queries from processor 110 of FIG. 1. Endpoint 310 may expose functions of devices attached to other connectors of multi-function device 135, such as connectors 315 and 320, as discussed further below.

Asynchronous buffer 325 may be connected to endpoint 310 and/or connector 305. Asynchronous buffer 325 may act as a landing point for requests, messages, and/or data to be exchanged between host processor 110 of FIG. 1 and other devices connected to multi-function device 135. Asynchronous buffer 325 may be asynchronous, in that asynchronous buffer 325 may operate at a different clock cycle than processor 110. That is, processor 110 of FIG. 1 may send a request, message, or data based on the clock cycle of processor 110 of FIG. 1, which may be written into asynchronous buffer 325 when received from processor 110 of FIG. 1; the request, message, or data may then be read from asynchronous buffer 325 at a time governed by the clock cycle of multi-function device 135. By including asynchronous buffer 325, multi-function device 135 may avoid needing to operate at the same clock cycle as processor 110.

Note that in some embodiments of the disclosure, multi-function device 135 may operate using the same clock cycle as processor 110 of FIG. 1. In such embodiments of the disclosure, asynchronous buffer 325 may be omitted entirely, or replaced with a synchronous buffer (to permit temporary storage of requests, messages, and/or data received from or to be transmitted to processor 110 of FIG. 1).

Multiplexer/demultiplexer 330 may be connected to asynchronous buffer 325. Multiplexer/demultiplexer 330 may access requests, messages, and/or data from asynchronous buffer 325. Multiplexer/demultiplexer 330 may then determine which device connected to multi-function device 135 the request, message, or data is intended, and may route the request, message, or data accordingly. To accomplish this function, multiplexer/demultiplexer 330 may also be connected to bridges 335 and 340, each of which may ultimately deliver a request, message, or data to a particular device connected to multi-function device 135. In another embodiment of the disclosure, multiplexer/demultiplexer 330 may communicate with more than two bridges. How multiplexer/demultiplexer 330 may determines to which bridge a particular request should be delivered is discussed further below.

Bridges 335 and 340 may be connected to asynchronous buffers 345 and 350, respectively. Asynchronous buffers 345 and 350, like asynchronous buffer 325, may enable multi-function device 135 to operate at a different clock cycle than the various devices connected to connectors 315 and 320. In addition, like asynchronous buffer 325, in some embodiments of the disclosure multi-function device 135 may operate using the same clock cycle as the device(s) connected to connectors 315 and/or 320. In such embodiments of the disclosure, asynchronous buffer 345 and/or 350 may be omitted entirely, or replaced with synchronous buffers (to permit temporary storage of requests, messages, and/or data received from or to be transmitted to the devices connected to connectors 315 and/or 320).

Root ports 355 and 360 may be connected to asynchronous buffers 345 and 350 respectively (and may be implemented as part of connectors 315 and 320, respectively). Root ports 355 and 360 may communicate with devices connected to connectors 315 and 320, respectively. For example, storage device 120 of FIG. 1 may be connected to connector 315, and computational storage unit 140 of FIG. 1 may be connected to connector 320.

Root ports 355 and 360 may interrogate devices connected to connectors 315 and 320 for information about those devices. For example, devices connected to connectors 315 or 320 may expose various functions identifying requests that may be made of the devices.

In some embodiments of the disclosure, these functions may include one or more physical functions (PFs) and/or one or more virtual functions (VFs). Each PF may represent a resource, such as a function offered by the device. Each VF may represent a function that is associated with a PF, but is "virtualized": that is, for a given PF there may be one more VFs. PFs and VFs may be discovered by when the devices are enumerated: this enumeration may be performed by root ports 355 and 360 rather than by processor 110 of FIG. 1. While PFs, VFs, endpoints, and root ports are concepts commonly associated with PCIe devices, embodiments of the disclosure may include similar concepts when using devices that connect to other busses.

Once the PFs and VFs are enumerated, this information may be provided to bridges 335 and 340, and eventually be provided back to multiplexer/demultiplexer 330 and/or endpoint 310. In this manner, endpoint 310 may be capable of exposing the functions (PFs, VFs, or both) of the various devices connected to connectors 315 and 320. If there are any conflicts between the functions exposed by the devices connected to connectors 315 and 320 (for example, identical function identifiers), multiplexer/demultiplexer 330 and/or endpoint 310 may change the enumerations to avoid such conflicts. For example, devices may enumerate the functions starting at zero: if the devices connected to connectors 315 and 320 were both assigned the function number starting at zero, multiplexer/demultiplexer 330 might not be able to determine for which device a particular request associated with function number zero is intended. Thus, for example, if the device connected to connector 315 has three PFs and the device connected to connector 320 has two PFs, multiplexer/demultiplexer 330 may assign the PFs to the device connected to connector 315 using numbers 0, 1, and 2, and may assign the PFs to the device connected to connector 320 using numbers 3 and 4. As long as no two PFs are assigned the same number, multiplexer/demultiplexer 330 may map functions in any desired manner. In addition, VFs exposed by the devices connected to connectors 315 and/or 320 may be exposed as VFs or PFs (that is, VFs of the devices may map to PFs exposed by multi-function device 135).

With this understanding the operation of multiplexer/demultiplexer 330 may now be understood. Upon receiving a request, message, or data from processor 110 of FIG. 1 via connector 305, multiplexer/demultiplexer 330 may determine the identifier of the function for which the data is relevant. For example, if the request is a write request intended for storage device 120 of FIG. 1, multiplexer/demultiplexer 330 may identify the write function in the write request, and may internally map that write function to storage device 120 of FIG. 1. Multiplexer/demultiplexer 330 may then route the write request to bridge 335 or bridge 340, depending on which bridge may lead to storage device 120 of FIG. 1. More information about how exposed functions of the devices attached to connectors 315 and 320 may be exposed by multi-function device 135 may be found in U.S. Patent Application Serial No. 16/846,271, filed April 10, 2020, now pending, which claims the benefit of U.S. Provisional Patent Application Serial No. 62/964,114, filed January 21, 2020, and U.S. Provisional Patent Application Serial No. 62/865,962, filed June 24, 2019.

Endpoint 310 and root ports 355 and 360 may be examples of PCIe ports, and may be used with embodiments of the disclosure with multi-function device 135 connecting to PCIe busses. In embodiments connecting multi-function device 135 connecting to other busses, endpoint 310 and root ports 355 and 360 may be replaced with other equivalent components, or may be omitted if not needed in that architecture.

While FIG. 3 shows multi-function device 135 as including three connectors 305, 315, and 320, which may connect to processor 110 of FIG. 1, storage device 120 of FIG. 1, and computational storage unit 140 of FIG. 1, embodiments of the disclosure may include any number of connectors. For example, multi-function device 135 may include four or more connectors: the additional connectors may connect to additional storage devices and/or computational storage units. Further, there may be any number (one or more) of storage devices and/or any number (one or more) of computational storage units connected to multi-function device 135 via connectors such as connectors 315 and 320. There is no requirement that the number of storage devices connected to multi-function device 135 be identical to the number of computational storage units connected to multi-function device 135. If multi-function device 135 includes more connectors than connectors 315 and 320, multi-function device 135 may also include additional bridges like bridges 335 and 340, additional asynchronous buffers like asynchronous buffers 345 and 350, and additional root ports like root ports 355 and 360, to support additional devices.

FIG. 3 also includes multiplexer/demultiplexer 365, which may be interposed between bridge 340 and asynchronous buffer 350. Multiplexer/demultiplexer 365 may be used in peer-to-peer communication between the devices connected to connectors 315 and 320. That is, using multiplexer/demultiplexer 365, it may be possible for the device attached to connector 320 to communicate with the device attached to connector 315 without having such communications to pass through processor 110 of FIG. 1 (via connector 305). To achieve this result, multiplexer/demultiplexer 365 may example information in a request, message, or data received at multiplexer/demultiplexer 365. Multiplexer/demultiplexer 365 may then identify any responses to such requests, messages, or data received from the device connected to connector 320, and may return such responses to the component that issued the original request, message, or data. For example, multiplexer/demultiplexer 365 may determine an identifier of the request, message, or data and the source from which the request, message, or data was received. Then, if multiplexer/demultiplexer 365 receives a response from the device connected to connector 320 associated with that identifier, multiplexer/demultiplexer 365 may send the response to the appropriate component.

As discussed above, in some embodiments of the disclosure, the devices connected to connectors 315 and 320 may be PCIe devices. In such embodiments of the disclosure, multiplexer/demultiplexer 365 may expect to process transaction layer packets (TLP).

In embodiments of the disclosure that support more than two devices connected to multi-function device 135, there may be a multiplexer/demultiplexer like multiplexer/demultiplexer 365 associated with devices attached to multi-function device 135. In some embodiments of the disclosure, such a multiplexer/demultiplexer may be interposed between a bridge like bridge 340 and an asynchronous buffer like asynchronous buffer 350 for all devices; in other embodiments of the disclosure, such a multiplexer/demultiplexer may be interposed between a bridge and an asynchronous buffer for computational storage units like computational storage unit 140 of FIG. 1, or between a bridge and an asynchronous buffer for storage devices like storage device 120 of FIG. 1. A multiplexer/demultiplexer may also be interposed between various components, permitting communication across the components. Embodiments of the disclosure may also include more than one multiplexer/demultiplexer to support various different paths for communication between components. In some embodiments of the disclosure, all components might be able to communicate with all other components; in other embodiments of the disclosure, only some components might be able to communicate with some other components. Note that multiplexer/demultiplexer 365 and similar multiplexers/demultiplexers may be connected to some or all bridges like bridges 335 and 340, to support the exchange of data between various pairs of devices.

Note that multiplexer/demultiplexer 365 may receive requests, messages, and/or data from a device attached to connector 315, and from processor 110 of FIG. 1 attached to connector 305. In some embodiments of the disclosure, requests received by multiplexer/demultiplexer 365 from processor 110 of FIG. 1 and from the device attached to connector 315 may include tags that identify the request. For example, read requests may include a tag that identifies the request, so that data may be returned associated with the same tag. When such tagged requests are received from only one source, it may be expected that tags will not conflict: for example, multiplexer/demultiplexer 365 may reasonably assume that processor 110 of FIG. 1 would not assign the same tag to two different read requests. But when requests are received from multiple sources, unless the multiple sources coordinate their use of tags, it might happen that a request received from one source might have the same tag as a request received from another source. Upon receiving the data from computational storage unit 140 of FIG. 1, multiplexer/demultiplexer 365 might not be able to differentiate which device originated the read request: this situation could be a conflict.

There are several ways in which such a conflict might be avoided. One solution may be to process requests from only one source at a time, and the other source might wait until no requests from the first source are active. But this solution might not offer the best performance. Another solution may be to permit only requests with unique tags to be active at any time. Thus, so long as each request has a different tag from any other active requests, the request may be processed; if the request replicates a tag that is associated with another active request, the new request may be buffered until the active request with that tag is complete. This solution offers better performance. Yet another solution may be for multiplexer/demultiplexer 365 to provide tags that may be used by the various sources: so long as each source may be provided a set of tags that does not intersect with the set of tags assigned to another source, tag conflict may be avoided. Yet another solution may be for multiplexer/demultiplexer 365 to introduce a level of indirection, mapping tags from each source to new tags (used internally to multiplexer/demultiplexer 365). When a request is received, the tag may be mapped and the mapping from the original tag to the new tag may be stored in a table in multiplexer/demultiplexer 365. When the request is completed, multiplexer/demultiplexer 365 may determine the original tag from the new tag received with the response.

To support such operations, bridge 335 may also be capable of directing requests, messages, or data (whether received from processor 110 of FIG. 1 as received via connector 305 or from the device connected to connector 315) to multiplexer/demultiplexer 365. This situation may occur, for example, if the devices attached to connectors 315 and 320 may support direct memory addressing (DMA). For example, assume that storage device 120 of FIG. 1 is connected to connector 315 and computational storage unit 140 of FIG. 1 is connected to connector 320. If computational storage unit 140 of FIG. 1 includes a memory (such as a DRAM) and storage device 120 of FIG. 1 may issue a DMA request that may write data into that memory, bridge 335 may direct the DMA request to multiplexer/demultiplexer 365 (rather than to multiplexer/demultiplexer 330). In this manner processor 110 of FIG. 1 may be bypassed, which may result in the request being processed more expeditiously.

While having either storage device 120 of FIG. 1 or computational storage unit 140 of FIG. 1 read or write data directly from the other is useful, it is not always possible or practical. For example, to support DMA, one device may need a memory, and the other device may need a circuit to read data from or write data to that memory (in the first device). If either element is lacking (for example, if computational storage unit 140 of FIG. 1 includes neither memory nor a circuit to read or write a memory in storage device 120 of FIG. 1), then DMA might not be possible.

In addition, if DMA is used, then the devices may need to handle the data as stored, without processing. If the data may need processing before it is used, DMA might not be an option. For example, consider computational storage unit 140 of FIG. 1 operating to process video data. If computational storage unit 140 of FIG. 1 expects data to be in a particular format-for example, MPEG format-but the data is in another format-for example, WVM format-computational storage unit 140 of FIG. 1 might not be able to process the data unless the data is transcoded first. Or if data in a table is stored in column format but computational storage unit 140 of FIG. 1 expects the table to be stored in row format, the table might need to be transposed before computational storage unit 140 of FIG. 1 may process the data.

If storage device 120 of FIG. 1 includes a processor that may process the data so that it is in a format that may be used by computational storage unit 140 of FIG. 1, storage device 120 of FIG. 1 may process the data before DMA is used to transfer the data from storage device 120 of FIG. 1 to computational storage unit 140 of FIG. 1. But another approach may also be used.

Buffer 370 may be used to store data being transferred between the devices connected to connectors 315 and 320. Once the data is stored in buffer 370, data processor 375 may then process the data as appropriate before transfer to the destination device. Once the data in buffer 370 has been processed by data processor 375, the processed data may be transferred to the destination device. In some embodiments of the disclosure, DMA may be used by the devices to write data to or read data from buffer 370. Buffer 370 may use any desired form of storage: for example, DRAM, SRAM, or the like, and may be on-chip or off-chip.

Buffer 370 may have an associated address range, which may be used by storage device 120 of FIG. 1 or computational storage unit 140 of FIG. 1 to read data from or write data to buffer 370, may be determined by multi-function device 135 itself, or may be assigned by processor 110 of FIG. 1.

Bridges 335 and 340 may use the address range of buffer 370 to determine whether a particular request to access an address involves memory 115 of FIG. 1 or buffer 370. Thus, for example, when bridge 335 receives a request to read data from or write data to a particular address, bridge 335 may examine the request and determine if the address is associated with buffer 370. If so, then bridge 335 may direct the request to buffer 370 rather than delivering the request to processor 110 of FIG. 1. Put another way, bridge 335 may process a request on an address in buffer 370 rather than delivering the request to processor 110 of FIG. 1 and letting processor 110 of FIG. 1 handle the request. Processing the request by bridge 335 may involve determining what data is to be read, written, or deleted, and carrying out the appropriate action. Bridge 335 may determine whether to process the request itself by examining the request. For example, if the request reads, writes, or deletes data at an address associated with buffer 370, sending the request to processor 110 of FIG. 1 or memory 115 of FIG. 1 might result in processor 110 of FIG. 1 or memory 115 of FIG. 1 sending another request back, since the data may be in buffer 370. By processing the request itself, bridge 335 may avoid sending requests back and forth to either processor 110 of FIG. 1 or memory 115 of FIG. 1, which may result in more efficient operation of machine 105 of FIG. 1. Bridge 340 may similarly redirect requests to buffer 370. Note that storage device 120 of FIG. 1 and/or computational storage unit 140 of FIG. 1 (or whatever devices might be connected to connectors 315 and 320) may be agnostic to the fact that their requests have been redirected to buffer 370: as far as the devices are concerned, the requests are happening in memory 115 of FIG. 1.

Data processor 375 may perform any desired processing on data in buffer 370. Data processor 375 may include a circuit and/or software to perform some expected processing. But data processor 375 may also be general enough to support processing as instructed by processor 110 of FIG. 1. That is, processor 110 of FIG. 1 may download a program to data processor 375, which may then execute that program on data in buffer 370 to transform the data into a format expected by the destination device.

As discussed above, in some embodiments of the disclosure data processing may be performed to put the data in a format appropriate for the device designated to receive the data. But in some embodiments of the disclosure, data processing may be performed even if the device designated to receive the data may be able to process the data. For example, the data might already be in a format that may be acceptable to the destination device, but there might be a more optimal format. In such embodiments of the disclosure, data processor 375 may process the data even though the data is already in a format that may be acceptable to the destination device.

In some embodiments of the disclosure, processor 110 of FIG. 1 may act as the scheduler. In such embodiments of the disclosure, processor 110 of FIG. 1 may send a request to the source device. Upon receiving a response from the source device, processor 110 of FIG. 1 may then signal data processor 375 to being processing the data in buffer 370. Once data processor 375 has completed the processing of the data in buffer 370, data processor 375 may signal processor 110 of FIG. 1 that the processing is complete, after which processor 110 of FIG. 1 may request that the destination device read the data from buffer 370.

In other embodiments of the disclosure, data processor 375 may act as a scheduler for the data transfer. Data processor 375 may send a request to the source device, asking that the data be transferred to buffer 370. Note that bridges 335 and 340 may access buffer 370, to effect writing data to (and reading data from) buffer 370. Once the transfer is complete, the source device may signal data processor 375 that the transfer is complete. Data processor 375 may then transform the data as appropriate. Once data processor 375 has finished transforming the data in buffer 370, data processor 375 may signal the destination device that the data is ready for retrieval, and the destination device may then read the data from buffer 370. Data processor 375 may receive such instructions regarding scheduling from processor 110 of FIG. 1. These instructions may be encoded using any desired protocol: a new protocol may also be designed to support such scheduling instructions.

When computational storage unit 140 of FIG. 1 processes a request from processor 110 of FIG. 1 (or an application running on processor 110 of FIG. 1), that processing may use data from buffer 370 (potentially as processed by data processor 375). But that processing may also involve data from processor 110. For example, if computational storage unit 140 of FIG. 1 is performing image recognition, the data from storage device 120 of FIG. 1 may include information about how to recognize various features of an image. But the image itself to be processed may be provided by processor 110 of FIG. 1. Or, if computational storage unit 140 of FIG. 1 is processing a query on a database, the database itself may come from storage device 120 of FIG. 1, but the query may be provided by processor 110 of FIG. 1. Thus, information processed by computational storage unit 140 of FIG. 1 may come from different sources via multi-function device 135.

As discussed above, multi-function device 135 may include more than two connectors 315 and 320, and therefore may include more than two attached devices. In some embodiments of the disclosure, some or all attached devices may have access to buffer 370, and may read data from or write data to buffer 370. In other embodiments of the disclosure, there may be any number (one or more) of buffers 370 (and possibly more than one data processor 375 as well). For example, there may a buffer 370 associated with each computational storage unit 140 of FIG. 1 connected to multi-function device 135. In that manner, data may be written to a buffer associated with the computational storage unit 140 of FIG. 1 that is expected to process the data. Note that buffer 370 may also be used to exchange data between two (or more) storage devices 120 of FIG. 1 attached to multi-function device 135, or between two (or more) computational storage units 140 of FIG. 1: embodiments of the disclosure are not limited to using buffer 370 to exchange data between storage device 120 of FIG. 1 and computational storage unit 140 of FIG. 1. There may be one or more data processors 375 as well: the number of data processors 375 may be one-to-one with the number of buffers 370, or the number of data processors 375 may differ from the number of buffers 370.

In some embodiments of the disclosure, peer-to-peer communication may use a PCIe protocol for communication. That is, bridges 335 and/or 340 may use the PCIe protocol for transmission of requests, messages, and/or data to and/or from the devices connected to connectors 315 and 320. In other embodiments of the disclosure, peer-to-peer communication may use other protocols. In some embodiments of the disclosure, the devices connected to connectors 315 and 320 may use different protocols for communication (although in such embodiments of the disclosure some mapping of requests, messages, or data formats and/or protocols between or among the protocols may be needed).

As noted above, computational storage unit 140 of FIG. 1 may, among other possibilities, be an NIC. When an NIC is connected to connector 320, storage device 120 of FIG. 1 (when connected to connector 315) may be able to communicate with the NIC via peer-to-peer communication (using, for example, buffer 370). Multi-function device 135 may therefore support communication between storage device 120 of FIG. 1 and the NIC without such communication necessarily passing through processor 110 of FIG. 1. Note that using an NIC as computational storage unit 140 of FIG. 1, and connecting the NIC to connector 320, does not prevent processor 110 of FIG. 1 from communicating with the NIC: processor 110 of FIG. 1 may still communicate with the NIC via multi-function device 135. In addition, if multi-function device 135 includes additional connectors, another computational storage unit 140 of FIG. 1 may also be connected to multi-function device 135, also enabling that computational storage unit 140 of FIG. 1 to communicate with the NIC without such communication passing through processor 110 of FIG. 1. In this manner, an NIC may be treated as a computational storage unit and combined with one or more storage devices and/or one or more other computational storage units 140 of FIG. 1.

While FIG. 3 shows connectors 315 and 320 and suggests that connectors 315 and 320 may permit the replacement of the attached devices, embodiments of the disclosure may include one or more of connectors 315 and 320 as permanent connectors. In addition, some embodiments of the disclosure may include both permanent and swappable connectors. For example, storage device 120 of FIG. 1 might be permanently affixed to connector 315 (perhaps via soldering), whereas computational storage unit 140 of FIG. 1 might be plugged into connector 320, which may support detaching and replacing computational storage unit 140 of FIG. 1. In some embodiments of the disclosure, swapping a device connected to connectors 315 or 320 may be performed as a hot-swap (that is, without powering down machine 105 of FIG. 1 to perform the replacement); in other embodiments of the disclosure, swapping a device connected to connectors 315 or 320 may involve powering machine 105 of FIG. 1 down before replacing the device.

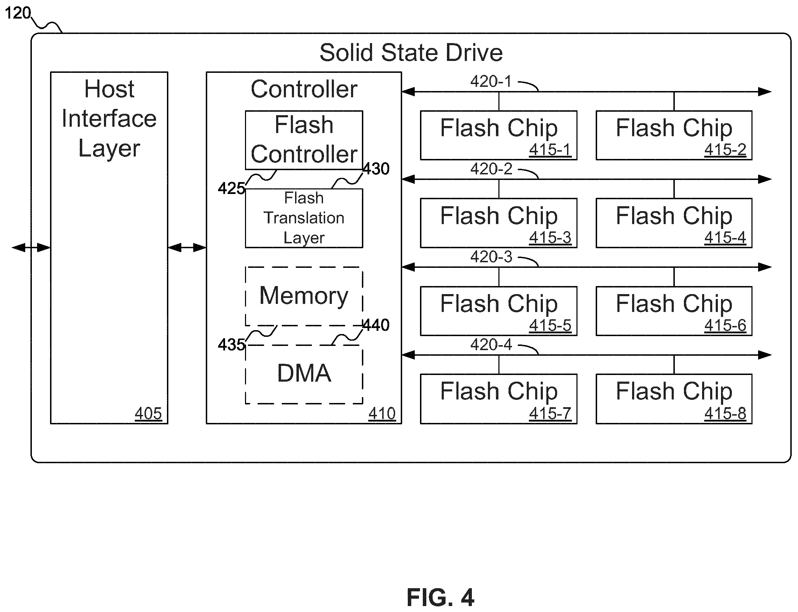

FIG. 4 shows details of storage device 120 of FIG. 1, according to embodiments of the disclosure. In FIG. 4, the implementation of storage device 120 is shown as for a Solid State Drive. In FIG. 4, storage device 120 may include host interface layer (HIL) 405, controller 410, and various flash memory chips 415-1 through 415-8 (also termed "flash memory storage"), which may be organized into various channels 420-1 through 420-4. Host interface layer 405 may manage communications between storage device 120 and other components (such as processor 110 of FIG. 1). Host interface layer 405 may also manage communications with devices remote from storage device 120: that is, devices that are not considered part of multi-function device 135 of FIG. 1, but in communication with storage device 120: for example, over one or more network connections. These communications may include read requests to read data from storage device 120, write requests to write data to storage device 120, and delete requests to delete data from storage device 120.

Host interface layer 405 may manage an interface across only a single port, or it may manage interfaces across multiple ports. Alternatively, storage device 120 may include multiple ports, each of which may have a separate host interface layer 405 to manage interfaces across that port. Embodiments of the inventive concept may also mix the possibilities (for example, an SSD with three ports might have one host interface layer to manage one port and a second host interface layer to manage the other two ports).

Controller 410 may manage the read and write operations, along with garbage collection and other operations, on flash memory chips 415-1 through 415-8 using flash memory controller 425. SSD controller 410 may also include flash translation layer 430, memory 435, and/or DMA controller 440. Flash translation layer 430 may manage the mapping of logical block addresses (LBAs) (as used by host 105 of FIG. 1) to physical block addresses (PBAs) where the data is actually stored on storage device 120. By using flash translation layer 430, host 105 of FIG. 1 does not need to be informed when data is moved from one block to another within storage device 120.

Memory 435 may be a local memory, such as a DRAM, used by storage controller 410. Memory 435 may be a volatile or non-volatile memory. Memory 435 may also be accessible via DMA from devices other than storage device 120: for example, computational storage unit 140 of FIG. 1. Memory 435 may be omitted, as shown by its representation using dashed lines.

DMA 440 may be a circuit that enables storage device 120 to execute DMA commands in a memory outside storage device 120. For example, DMA 440 may enable storage device 120 to read data from or write data to memory 115 of FIG. 1 or a memory in computational storage unit 140 of FIG. 1. DMA 440 may be omitted, as shown by its representation using dashed lines.

While FIG. 4 shows storage device 120 as including eight flash memory chips 415-1 through 415-8 organized into four channels 420-1 through 420-4, embodiments of the inventive concept may support any number of flash memory chips organized into any number of channels. Similarly, while FIG. 4 shows the structure of a SSD, other storage devices (for example, hard disk drives) may be implemented using a different structure from that shown in FIG. 4 to manage reading and writing data, but with similar potential benefits.

While FIG. 4 shows storage device 120 as being just a storage device, embodiments of the disclosure may include other components within storage device 120. For example, storage device 120 might have its own computational storage unit, which might be used by processor 110 of FIG. 1 (or other devices attached to multi-function device 135 of FIG. 1). For example, processor 110 of FIG. 1 or a computational storage unit connected to multi-function device 135 of FIG. 1 via connector 320 of FIG. 1 might use a computational storage unit included as part of storage device 120.

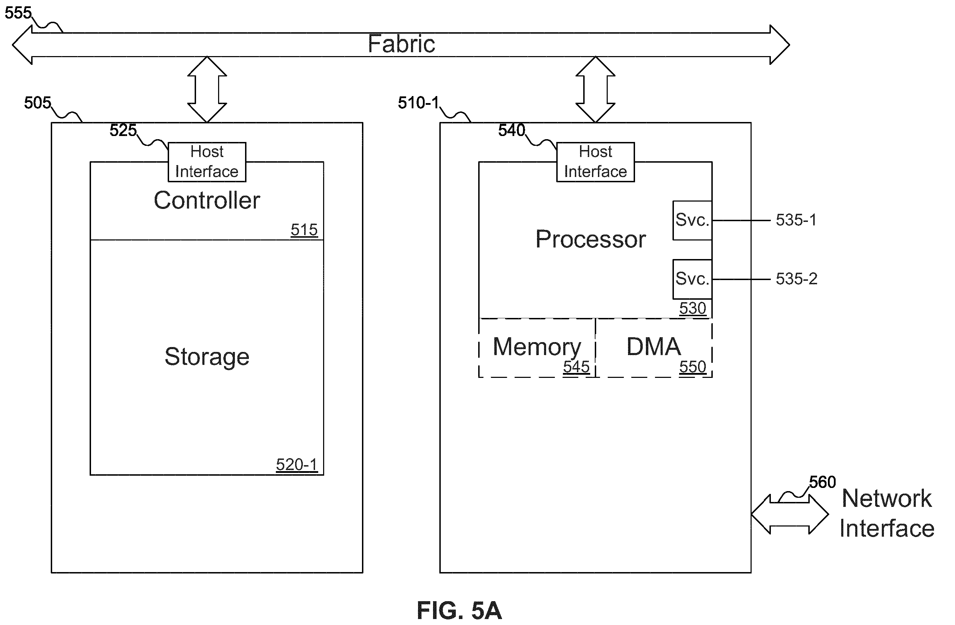

FIGs. 5A-5D shows example implementations of computational storage unit 140 of FIG. 1, according to embodiments of the disclosure. In FIG. 5A, storage device 505 and computational device 510-1 are shown. Storage device 505 may include controller 515 and storage 520-1, and may be reachable across a host protocol interface, such as host interface 525. Host interface 525 may be used both for management of storage device 505 and to control I/O of storage device 505. An example of host interface 525 may include queue pairs for submission and completion, but other host interfaces 525 are also possible, using any native host protocol supported by storage device 505.

Computational device 510-1 may be paired with storage device 505. Computational device 510-1 may include any number (one or more) processors 530, which may offer one or more services 535-1 and 535-2. To be clearer, each processor 530 may offer any number (one or more) services 535-1 and 535-2 (although embodiments of the disclosure may include computational device 510-1 including exactly two services 535-1 and 535-2). Each processor 530 may be a single core processor or a multi-core processor. Computational device 510-1 may be reachable across a host protocol interface, such as host interface 540, which may be used for both management of computational device 510-1 and/or to control I/O of computational device 510-1. As with host interface 525, host interface 540 may include queue pairs for submission and completion, but other host interfaces 540 are also possible, using any native host protocol supported by computational device 510-1. Examples of such host protocols may include Ethernet, RDMA, TCP/IP, InfiniBand, iSCSI, PCIe, SAS, and SATA, among other possibilities. In addition, host interface 540 may support communications with other components of system 105 of FIG. 1-for example, a NIC, if the NIC is not connected to multi-function device 135 of FIG. 1-or to operate as a NIC and communicate with local and/or remote network/cloud components.

Processor(s) 530 may be thought of as near-storage processing: that is, processing that is closer to storage device 505 than processor 110 of FIG. 1. Because processor(s) 530 are closer to storage device 505, processor(s) 530 may be able to execute commands on data stored in storage device 505 more quickly than for processor 110 of FIG. 1 to execute such commands. Processor(s) 530 may have associated memory 545, which may be used for local execution of commands on data stored in storage device 505. Memory 545 may also be used similarly to memory 435 of FIG. 4, and may be accessible by DMA from devices other than computational storage unit 410-1. Memory 545 may include local memory similar to memory 115 of FIG. 1, on-chip memory (which may be faster than memory such as memory 115 of FIG. 1, but perhaps more expensive to produce), or both.

Computational storage unit 410-1 may also include DMA 550. DMA 550 may be used similarly to DMA 440 of FIG. 4, and may be used to access memories in devices other than computational storage unit 410-1.

Depending on the implementation, memory 545 and/or DMA 550 may be omitted, as shown by the dashed lines.

While FIG. 5A shows storage device 505 and computational device 510-1 as being separately reachable across fabric 555, embodiments of the disclosure may also include storage device 505 and computational device 510-1 being serially connected, or sharing multi-function device 135 of FIG. 1 (as shown in FIG. 1). That is, commands directed to storage device 505 and computational device 510-1 might both be received at the same physical connection to fabric 555 and may pass through one device (or multi-function device 135 of FIG. 1) to reach the other. For example, if computational device 510-1 is located between storage device 505 and fabric 555, computational device 510-1 may receive commands directed to both computational device 510-1 and storage device 505: computational device 510-1 may process commands directed to computational device 510-1, and may pass commands directed to storage device 505 to storage device 505. Similarly, if storage device 505 is located between computational device 510-1 and fabric 555, storage device 505 may receive commands directed to both storage device 505 and computational device 510-1: storage device 505 may process commands directed to storage device 505 and may pass commands directed to computational device 510-1 to computational device 510-1.

Services 535-1 and 535-2 may offer a number of different functions that may be executed on data stored in storage device 505. For example, services 535-1 and 535-2 may offer pre-defined functions, such as encryption, decryption, compression, and/or decompression of data, erasure coding, and/or applying regular expressions. Or, services 535-1 and 535-2 may offer more general functions, such as data searching and/or SQL functions. Services 535-1 and 535-2 may also support running application-specific code. That is, the application using services 535-1 and 535-2 may provide custom code to be executed using data on storage device 505. Services 535-1 and 535-2 may also any combination of such functions. Table 1 lists some examples of services that may be offered by processor(s) 530.

**Table 1: Service Types**

| |
|---|
| Compression |
| Encryption |
| Database filter |
| Erasure coding |
| RAID |
| Hash/CRC |
| RegEx (pattern matching) |
| Scatter Gather |
| Pipeline |
| Video compression |
| Data deduplication |
| Operating System Image Loader |
| Container Image Loader |
| Berkeley packet filter (BPF) loader |
| FPGA Bitstream loader |
| Large Data Set |

Processor(s) 530 (and, indeed, computational device 510-1) may be implemented in any desired manner. Example implementations may include a local processor, such as a CPU or some other processor (such as an FPGA, an ASIC, or a SoC), a GPU, a GPGPU, a DPU, an NPU, an NIC, or a TPU, among other possibilities. Processor(s) 530 may also be implemented using an FPGA or an ASIC, among other possibilities. If computational device 510-1 includes more than one processor 530, each processor may be implemented as described above. For example, computational device 510-1 might have one each of CPU, TPU, and FPGA, or computational device 510-1 might have two FPGAs, or computational device 510-1 might have two CPUs and one ASIC, etc.

Depending on the desired interpretation, either computational device 510-1 or processor(s) 530 may be thought of as a computational storage unit.

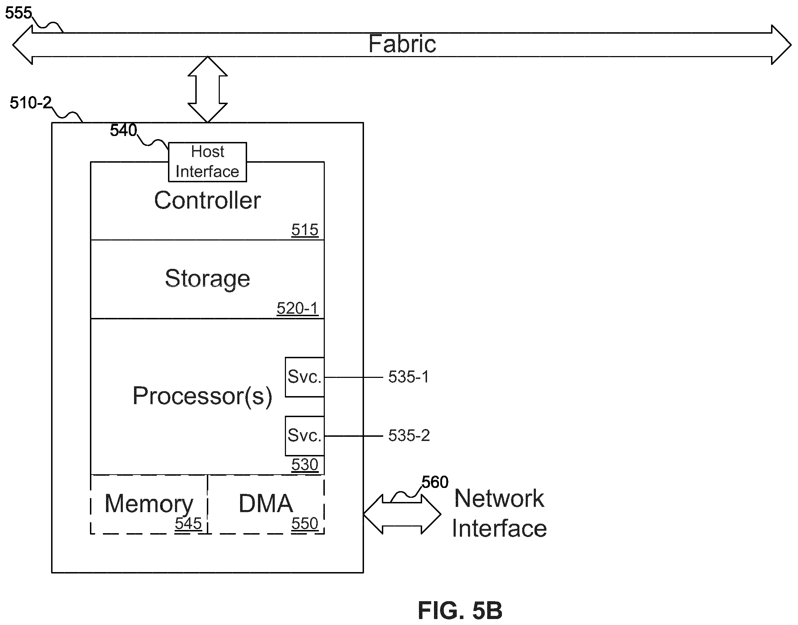

Some embodiments of the disclosure may include other mechanisms to communicate with storage device 505 and/or computational device 510-1. For example, storage device 505 and/or computational device 510-1 may include network interface 560, which may support communication with other devices using Ethernet, RDMA, TCP/IP, InfiniBand, SAS, iSCSI, or SATA, among other possibilities. Network interface 560 may provide another interface for communicating with storage device 505 and/or computational device 510-1. While FIG. 5A shows network interface 560 as providing communication to computational device 510-1, embodiments of the disclosure may include a network interface to storage device 505 as well. In addition, in some embodiments of the disclosure, such other interfaces may be used instead of host interfaces 525 and/or 540 (in which case host interfaces 525 and/or 540 may be omitted). Other variations, shown in FIGs. 5B-5D below, may also include such interfaces.

Whereas FIG. 5A shows storage device 505 and computational device 510-1 as separate devices, in FIG. 5B they may be combined. Thus, computational device 510-2 may include controller 515, storage 520-1, processor(s) 530 offering services 535-1 and 535-2, memory 545, and/or DMA 550. As with storage device 505 and computational device 510-1 of FIG. 5A, management and I/O commands may be received via host interface 540 and/or network interface 560. Even though computational device 510-2 is shown as including both storage and processor(s) 530, FIG. 5B may still be thought of as including a storage device that is associated with a computational storage unit.

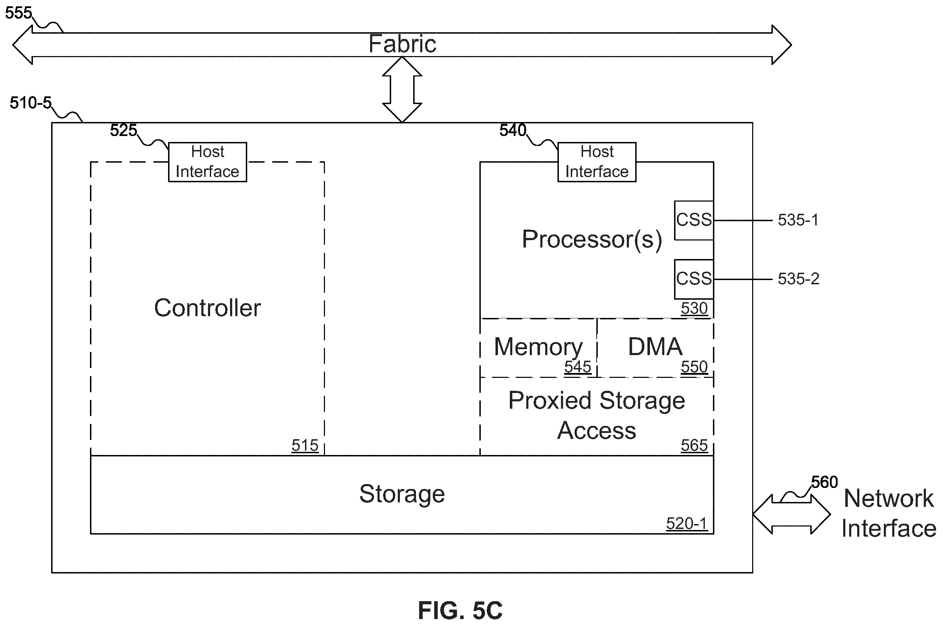

In yet another variation shown in FIG. 5C, computational device 510-5 is shown. Computational device 510-3 may include controller 515 and storage 520-1, as well as processor(s) 530 offering services 535-1 and 535-2, memory 545, and/or DMA 550. But even though computational device 510-3 may be thought of as a single component including controller 515, storage 520-1, processor(s) 530 (and also being thought of as a storage device associated with a computational storage unit), memory 545, and/or DMA 550, unlike the implementation shown in FIG. 5B controller 515 and processor(s) 530 may each include their own host interfaces 525 and 540 and/or network interface 560 (again, which may be used for management and/or I/O). By including host interface 525, controller 515 may offer transparent access to storage 520-1 (rather than requiring all communication to proceed through processor(s) 530).

In addition, processor(s) 530 may have proxied storage access 565 to storage 520-1. Thus, instead of routing access requests through controller 515, processor(s) 530 may be able to directly access the data from storage 520-1.

In FIG. 5C, both controller 515 and proxied storage access 565 are shown with dashed lines to represent that they are optional elements, and may be omitted depending on the implementation.

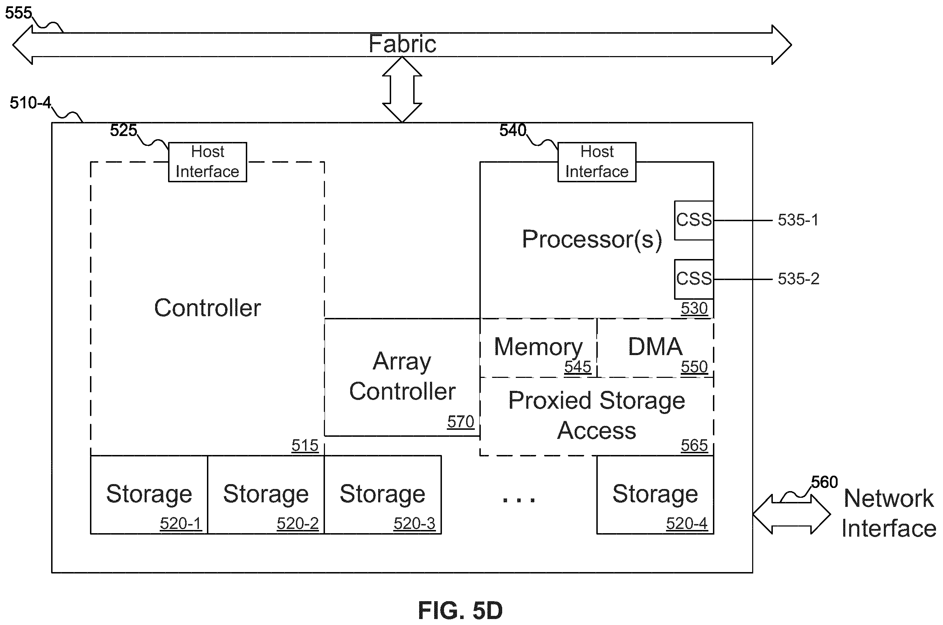

Finally, FIG. 5D shows yet another implementation. In FIG. 5D, computational device 510-4 is shown, which may include controller 515, memory 545, DMA 550, and proxied storage access 565 similar to FIG. 5C. In addition, computational device 510-4 may include an array of one or more storage 520-1 through 520-4. While FIG. 5D shows four storage elements, embodiments of the disclosure may include any number (one or more) of storage elements. In addition, the individual storage elements may be other storage devices, such as those shown in FIGs. 5A-5D.

Because computational device 510-4 may include more than one storage element 520-1 through 520-4, computational device 510-4 may include array controller 570. Array controller 570 may manage how data is stored on and retrieved from storage elements 520-1 through 520-4. For example, if storage elements 520-1 through 520-4 are implemented as some level of a Redundant Array of Independent Disks (RAID), array controller 570 may be a RAID controller. If storage elements 520-1 through 520-4 are implemented using some form of Erasure Coding, then array controller 570 may be an Erasure Coding controller.

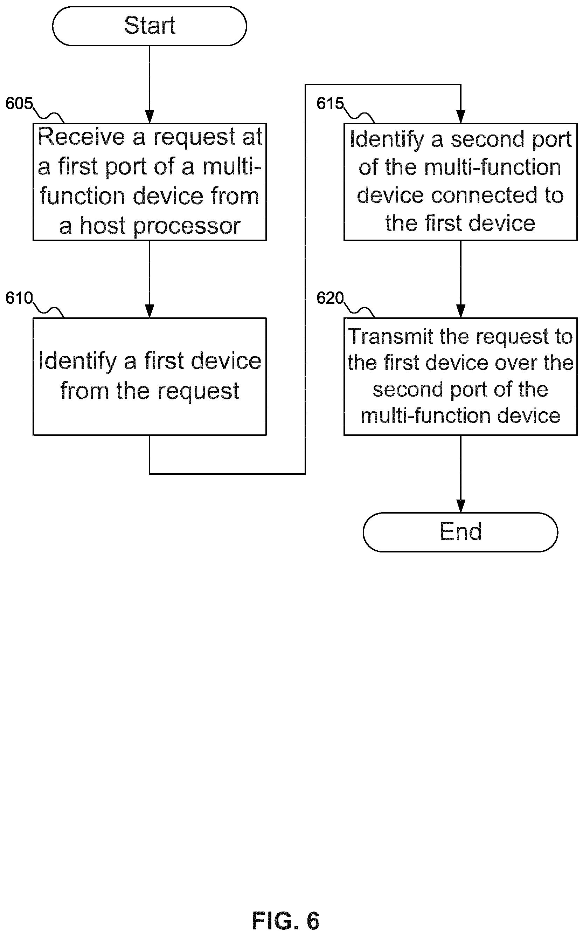

FIG. 6 shows a flowchart of an example procedure for using multi-function device 135 of FIG. 1 to deliver requests to storage device 120 of FIG. 1 and/or computational storage unit 140 of FIG. 1, according to embodiments of the disclosure. In FIG. 6, at block 605, multi-function device 135 of FIG. 1 may receive a request at port 310 of FIG. 3. At block 610, multiplexer/demultiplexer 330 of FIG. 3 may identify a device from the request. At block 615, multiplexer/demultiplexer 330 of FIG. 3 may identify port 355 of FIG. 3 or port 360 of FIG. 3 as being connected to the device identified from the request. At block 620, multiplexer/demultiplexer 330 of FIG. 3, bridge 335 of FIG. 3 or bridge 340 of FIG. 3, and port 355 of FIG. 3 or port 360 of FIG. 3 may transmit the request to the device identified from the request.

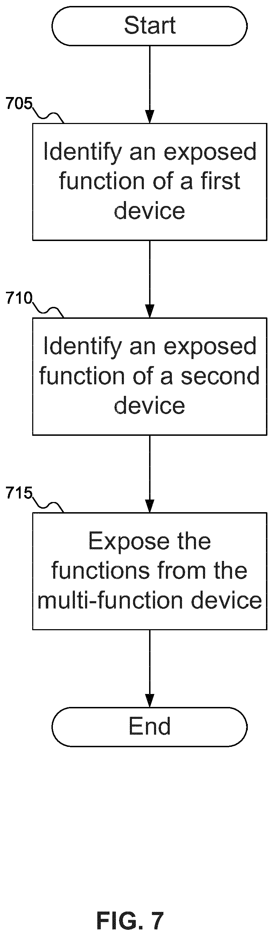

FIG. 7 shows a flowchart of an example procedure for using multi-function device 135 of FIG. 1 to identify exposed functions of the storage device 120 of FIG. 1 and/or computational storage unit 140 of FIG. 1, according to embodiments of the disclosure. In FIG. 7, at block 705, root port 355 of FIG. 3 may identify a function exposed by the device connected to connector 315 of FIG. 3. At block 710, root port 360 of FIG. 3 may identify a function exposed by the device connected to connector 320 of FIG. 3. At block 715, endpoint 310 of FIG. 3 may expose the functions as from multi-function device 135 of FIG. 1.

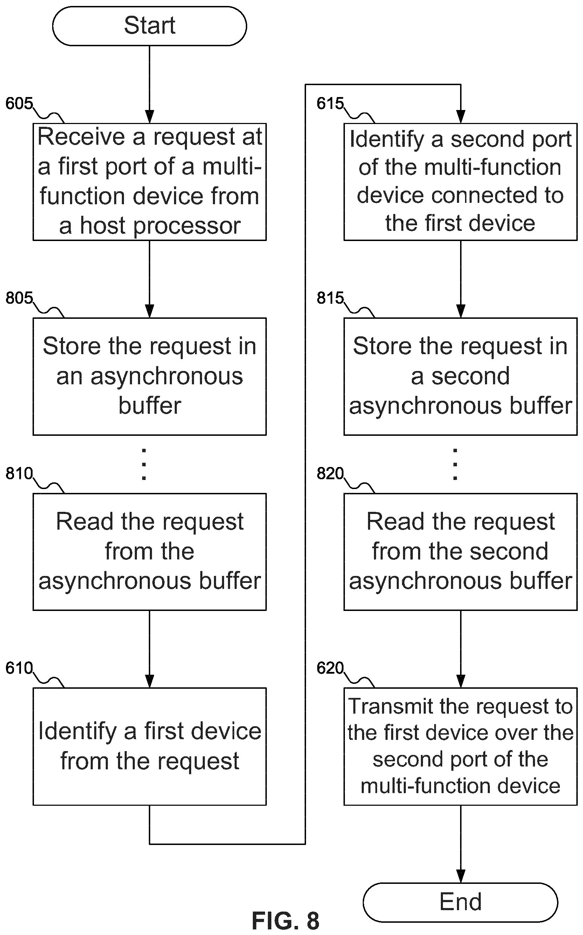

FIG. 8 shows a flowchart of an example procedure for using the asynchronous buffers of FIG. 3, according to embodiments of the disclosure. In FIG. 8, at block 605, multi-function device 135 of FIG. 1 may receive a request at port 310 of FIG. 3. Block 605 uses the same identifier as block 605 of FIG. 6 as the operations described are the same. At block 805, multi-function device 135 of FIG. 1 may store the request in asynchronous buffer 325 of FIG. 3.

At block 810, at some later time, multiplexer/demultiplexer 330 of FIG. 3 may read the request from asynchronous buffer 325 of FIG. 3. At block 610, multiplexer/demultiplexer 330 of FIG. 3 may identify a device from the request. At block 615, multiplexer/demultiplexer 330 of FIG. 3 may identify port 355 of FIG. 3 or port 360 of FIG. 3 as being connected to the device identified from the request. Blocks 610 and 615 use the same identifiers as blocks 610 and 615 of FIG. 6 as the operations described are the same. At block 815, bridge 335 of FIG. 3 or bridge 340 of FIG. 3 may store the request in asynchronous buffer 345 of FIG. 3 or asynchronous buffer 350 of FIG. 3.

At block 820, at some later time, root port 355 of FIG. 3 may read the request from asynchronous buffer 345 of FIG. 3, or root port 360 of FIG. 3 may read the request from asynchronous buffer 350 of FIG. 3. At block 620, root port 355 of FIG. 3 or root port 360 of FIG. 3 may transmit the request to the device identified from the request. Block 620 uses the same identifier as block 620 of FIG. 6 as the operations described are the same.

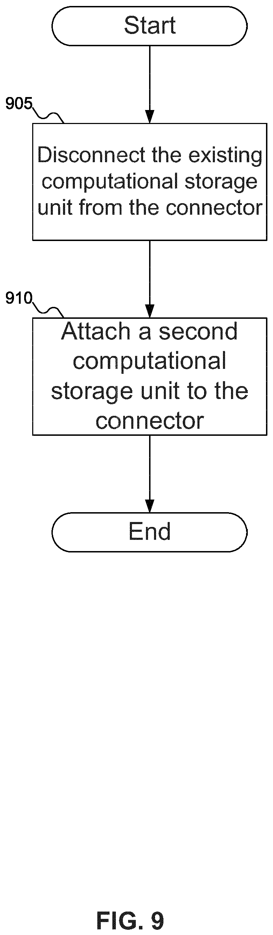

FIG. 9 shows a flowchart of an example procedure for replacing computational storage unit 140 of FIG. 1 with another computational storage unit, according to embodiments of the disclosure. At block 905, computational storage unit 140 of FIG. 1 may be disconnected from connector 320 of FIG. 3. At block 910, a new computational storage unit may be connected to connector 320 of FIG. 3.

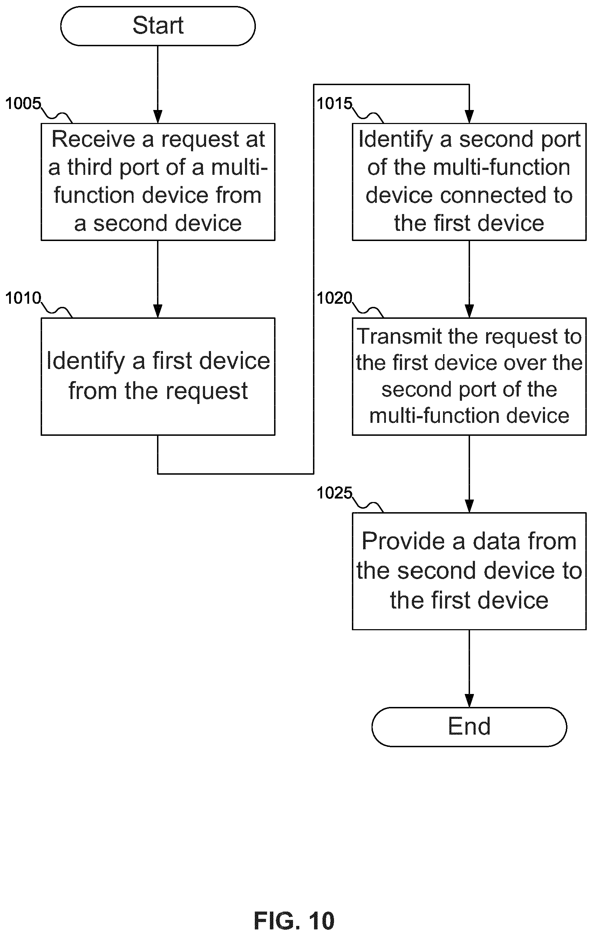

FIG. 10 shows a flowchart of an example procedure for using multi-function device 135 of FIG. 1 to deliver requests between devices attached to multi-function device 135 of FIG. 1, according to embodiments of the disclosure. At block 1005, multi-function device 135 of FIG. 1 may receive a request from a device connected to a port of multi-function device 135 of FIG. 1. Note that the device in question may be connected using port 355 of FIG. 3 or port 360 of FIG. 3, or other ports connected to other storage devices or computational storage units, rather than processor 110 of FIG. 1 connected to port 310 of FIG. 3. At block 1010, At block 1010, bridge 335 of FIG. 3 or bridge 340 of FIG. 3 may identify a device from the request. At block 1015, bridge 335 of FIG. 3 or bridge 340 of FIG. 3 may identify port 355 of FIG. 3 or port 360 of FIG. 3 as being connected to the device identified from the request. At block 1020, bridge 335 of FIG. 3 or bridge 340 of FIG. 3 may transmit the request to the device identified from the request. Finally, at block 1025, the device that sent the original request may provide data to the device identified in the request.

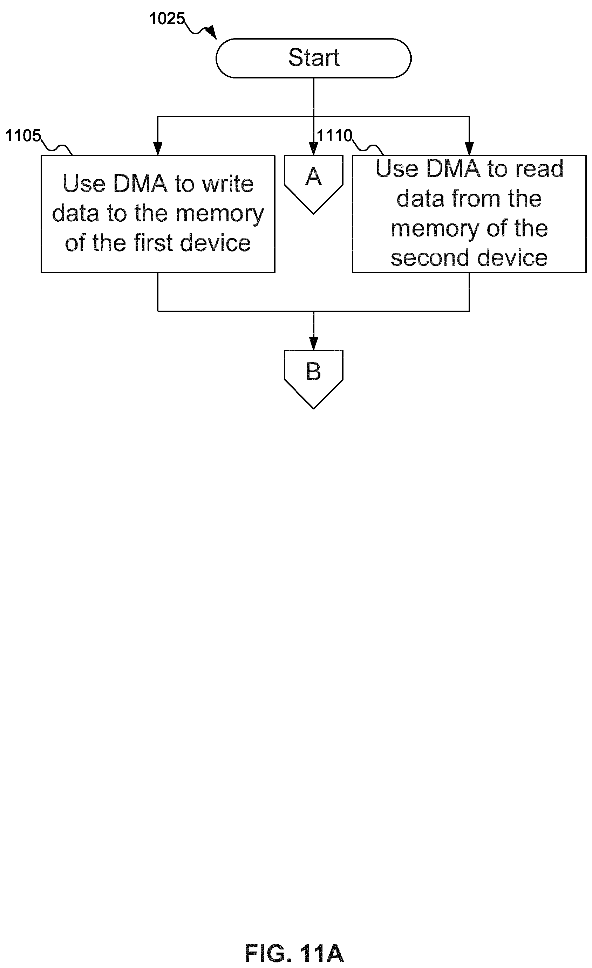

FIGs. 11A-11B show a flowchart of an example procedure for devices attached to multi-function device 135 of FIG. 1 to share data, according to embodiments of the disclosure. In FIG. 11A, at block 1105, one device may use DMA 440 of FIG. 4 or DMA 550 of FIGs. 5A-5D to write data to memory 435 of FIG. 4 or memory 545 of FIGs. 5A-5D. Alternatively, at block 1110, one device may use DMA 440 of FIG. 4 or DMA 550 of FIGs. 5A-5D to read data from memory 435 of FIG. 4 or memory 545 of FIGs. 5A-5D.

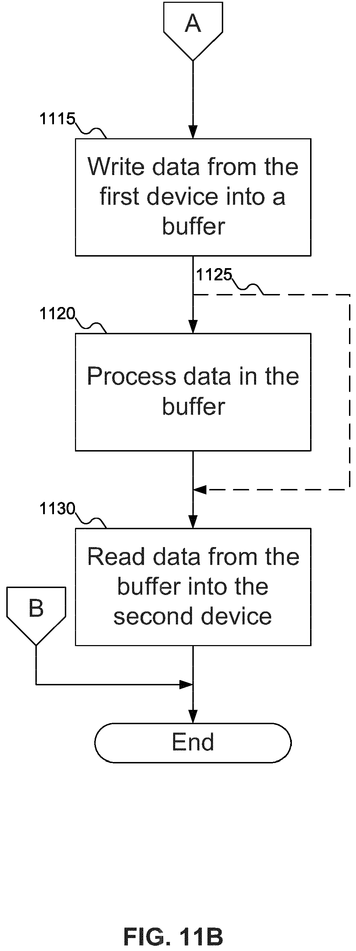

Alternatively, at block 1115 (FIG. 11B), one device may write data into buffer 370 of FIG. 3. At block 1120, data processor 375 of FIG. 3 may process the data in buffer 370 of FIG. 3, perhaps to put the data in a format that may be processed by the other device. Note that block 1120 is optional, as shown by dashed line 1125. Finally, at block 1130, the second device may read the data from buffer 370 of FIG. 3.

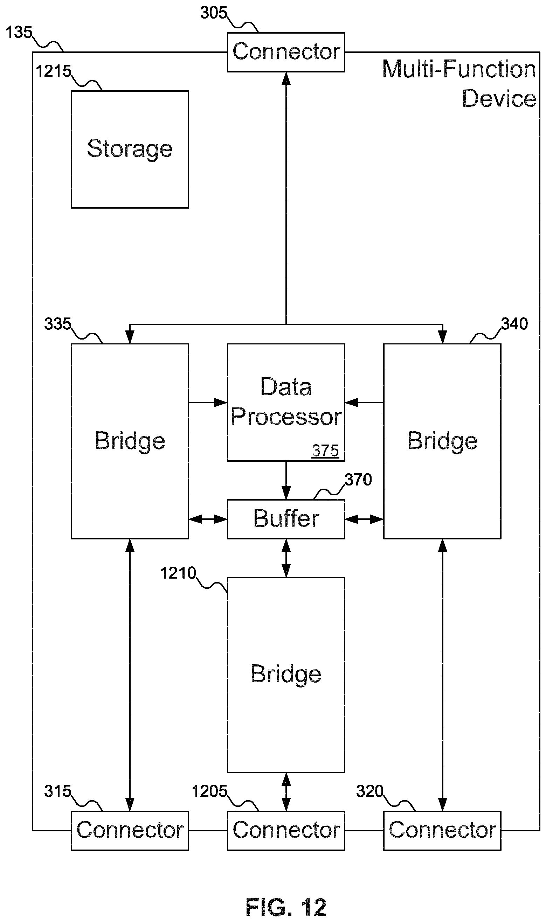

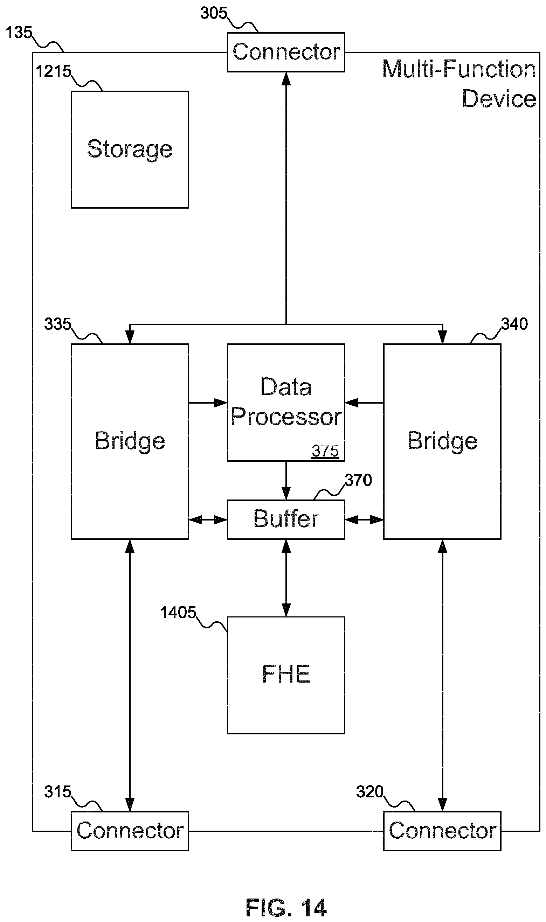

As discussed above with reference to FIG. 3, some embodiments of the disclosure may support connecting more than two devices to multi-function device 135 of FIG. 1. FIGs. 12 and 14 illustrate some potential embodiments of the disclosure with more than two connected devices.

In FIG. 12, as with FIG. 3, multi-function device 135 may include connectors 305, 315, and 320 for connecting multi-function device 135 to processor 110, storage device 120, and computational storage unit 140 of FIG. 1. (FIG. 12 omits endpoint 310, asynchronous buffers 325, 345, and 350, multiplexers 330 and 365, and root ports 355 and 360: subsets or all of these components may be included in some embodiments of the disclosure, but may be omitted in other embodiments of the disclosure as shown.) Multi-function device 135 may also include connector 1205, which may be connected to bridge 1210. Bridge 1210 may function similarly to bridges 335 and 340: bridge 1210 may deliver a request, message, or data to a device connected to multi-function device 135 via connector 1205. This device may be another storage device, another computational storage unit (as a particular example, an FHE circuit), or any other type of device that may be supported using multi-function device 135.

FIG. 12 does not show connections between bridge 1210 and connector 305, bridges 335 and 340, or data processor 375. The omission of these lines for communication is not intended to suggest that bridge 1210 is not in communication with these components: rather, these lines have been left out of FIG. 12 for clarity. It may be understood that bridge 1210 may communicate with connector 305, bridges 335 and 340, and data processor 375 in a manner similar to bridges 335 and 340.

In embodiments of the disclosure where multi-function device 135 supports only two devices, which may be storage device 120 of FIG. 1 and computational storage unit 140 of FIG. 1, buffer 370 may effectively be a temporary storage used to pass data between the devices. For example, storage device 120 of FIG. 1 may write data into buffer 370, which computational storage unit 140 of FIG. 1 may then read and process. But in embodiments of the disclosure such as are shown in FIG. 12, when multi-function device 135 supports the use of multiple devices-be they storage devices or computational storage units-accessing buffer 370, buffer 370 might be used as a shared memory rather than as a buffer to shuttle data between two devices. That is, data may reside in buffer 370 while the various devices may access the data from buffer 370. For example, storage device 120 of FIG. 1 might copy data into buffer 370, which computational storage unit 140 of FIG. 1 may then process and overwrite with new data, which may then be processed by yet another computational storage unit 140 of FIG. 1.

As a particular example, consider a situation where storage device 120 of FIG. 1 stores video data that is encoded using a particular encoding, one computational storage unit 140 of FIG. 1 connected to multi-function device 135 is a TPU or GPU to perform object detection on the video data, and another computational storage unit 140 of FIG. 1 is a video processing unit (VPU) to perform video decoding. When host processor 110 of FIG. 1 asks the TPU or GPU to perform video decoding, the TPU or GPU may ask storage device 120 of FIG. 1 to transfer the data to buffer 370, and then ask the VPU to perform video decoding so that the TPU or GPU can then perform the object detection on the video data. The data may remain in place in buffer 370 for both video decoding and object detection by the TPU or GPU and the VPU.

There are some other points worth noting about this example, which generalize to embodiments of the disclosure. First, as noted above, rather than being used as a transit buffer, buffer 370 may be used as a shared memory, with storage device 120 of FIG. 1 and the TPU or GPU and the VPU all accessing buffer 370. In the above example, storage device 120, the VPU, and the TPU or GPU each access data from buffer 370 in turn, performing their operations before the next device takes over. But more generally, embodiments of the disclosure may permit any subset of devices, or all devices, connected to multi-function device 135 to access data from buffer 370 in either a choreographed manner or simultaneously (for example, if different devices are accessing different data and there is no concern about what one device does affecting data used by another device, two or more devices might access data from buffer 370 simultaneously).

Second, note that in the example host processor 110 of FIG. 1 only asks the TPU or GPU to perform object detection, and the TPU or GPU issues requests to storage device 120 of FIG. 1 and to the VPU to carry out their functions. In other words, one controller attached to multi-function device 135 may issue requests to another controller attached to multi-function device 135: not all requests necessarily issue from processor 110 of FIG. 1. In other words, host processor 110 of FIG. 1 does not need to orchestrate or manage the operations of multiple devices connected to multi-function device 135: the devices themselves may trigger functions of each other.

Third, host processor 110 of FIG. 1 does not need to know that the VPU is connected to multi-function device 135. Put another way, host processor 110 of FIG. 1 is only concerned with the object detection being done: host processor 110 of FIG. 1 is not concerned with what additional processes may need to be performed to complete the desired operation. Host processor 110 of FIG. 1 may remain agnostic to the fact that controllers of other devices may be handling specific operations requested by host processor 110 of FIG. 1.

An advantage of having one controller issue requests to another controller, and that host processor 110 of FIG. 1 may be unaware that a particular controller is connected to multi-function device 135, is that some controllers may be hidden from host processor 110 of FIG. 1. Continuing the above example, multi-function device 135 might not even inform host processor 110 of FIG. 1 that the VPU is connected to multi-function device.

To achieve this result, multi-function device 135 may enumerate the various devices attached to multi-function device 135 and determine how the devices are configured. Each device's configuration may specify what functions the device offers, and which devices/controllers are to be exposed to host processor 110 of FIG. 1. This information may be stored in a list of device configurations, which may be stored in storage 1215, and which multi-function device 135 may use to selectively expose or hide the various devices/controllers from host processor 110 of FIG. 1.

In some embodiments of the disclosure, multi-function device 135 may notify storage device 120 of FIG. 1 or computational storage unit 140 of FIG. 1 about the devices connected to multi-function device 135 via connectors 315, 320, and 1215. For example, multi-function device 135 may enumerate all attached devices and may provide information (such as all exposed functions) about all attached devices to all attached devices. In other embodiments of the disclosure, multi-function device 135 may inform the attached devices about devices, but using the devices' configurations. In such embodiments of the disclosure, a device may specify whether each of its functions (or even the device as a whole) should be reported to other devices or not. In some embodiments of the disclosure, devices may not only specify whether their functions (or the devices themselves) are exposed to or hidden from other devices, but may even do so selectively, letting some devices know about the device's functions and hiding that functionality from other devices.

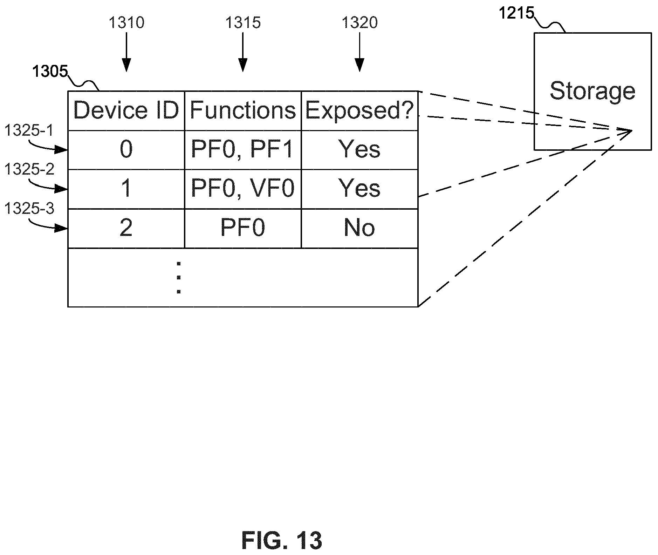

FIG. 13 shows details of a list of device configurations that may be used by multi-function device 135 of FIG. 1, according to embodiments of the disclosure. In FIG. 13, storage 1215 is shown as including list of device configurations 1305. List of device configurations 1305 may include various columns, such as device identifier 1310, functions 1315, and indicator 1320 indicating whether the device/controller is exposed to host processor 110 of FIG. 1 or not. List of device configurations 1305 may also include entries, such as entries 1325-1, 1325-2, and 1325-3 (entries 1325-1 through 1325-3 may be referred to collectively as entries 1325). Each entry 1325 may identify a particular device, list the functions exposed by that device, and indicate whether the device/controller is to be exposed to host processor 110 of FIG. 1. For example, entry 1325-1 indicates that the device with identifier 0 exposes two physical functions and is to be exposed to host processor 110 of FIG. 1, entry 1325-2 indicates that the device with identifier 1 exposes one physical function and one virtual function and is to be exposed to host processor 110 of FIG. 1, and entry 1325-3 indicates that the device with identifier 2 exposes one physical function and is to be hidden from host processor 110 of FIG. 1. Multi-function device 135 of FIG. 1 may use this information to expose appropriate functions to host processor 110 of FIG. 1.

While FIG. 13 shows three entries 1325 in list of device configurations 1305, embodiments of the disclosure may include any number (one or more) of entries 1325. In addition, list of device configurations 1305 may include configurations for devices not currently attached to multi-function device 135 of FIG. 1. That is, entries 1325 may include information about devices that were connected to multi-function device 135 of FIG. 1 at one point, but are not currently connected. Such entries 1325 may be kept in case the devices in question are later connected again to multi-function device 135 of FIG. 1, avoiding the need to interrogate anew the device for its configuration.

Each function 1315 listed in entries 1325 may represent a different capability offered by the identified device. For example, consider storage device 120 of FIG. 1, but with a built-in computational storage unit. Storage device 120 of FIG. 1 might expose two functions: one to initiate reading data from or writing data to storage device 120 of FIG. 1, and another to access the built-in computational storage unit. To avoid confusion between how a particular function offered by the device is triggered and the fact that the device may expose a "function" to trigger that functionality, any reference to a "capability" of a device is intended to mean the functionality the device offers rather than the "function" that triggers that functionality.

As shown in list of device configurations 1305, different devices may offer different numbers of functions. For example, entries 1325-1 and 1325-2 show devices with two functions expose, whereas entry 1325-3 shows a device with only one function exposed. Embodiments of the disclosure may include any number (one or more) of devices, each with any number (one or more) of functions exposed by the device.

In referring to physical and virtual functions in column 1315, list of device configurations 1305 implies that the devices are PCIe devices. In some embodiments of the disclosure, PCIe busses and functions may be used. But embodiments of the disclosure may also use architectures other than PCIe, and may use other mechanisms to enable host processor 110 of FIG. 1 (or other controllers) to trigger operations within various devices. Embodiments of the disclosure are intended to cover all such variations, regardless of the particular nomenclature.

In FIG. 13, indicator 1320 suggests that the entire device is either exposed to host processor 110 of FIG. 1 or hidden from host processor 110 of FIG. 1. In some embodiments of the disclosure, the entire device may be exposed to or hidden from host processor 110 of FIG. 1. But in other embodiments of the disclosure, different functions of the device may be selectively exposed or hidden from host processor 110 of FIG. 1. For example, storage device 120 of FIG. 1 might include a compression circuit that may function as a computational storage unit built into storage device 120 of FIG. 1. Requests to read data from or write data to storage device 120 of FIG. 1 might automatically trigger compression/decompression of the data, and so the compression circuit might be hidden from host processor 110 of FIG. 1. But other computational storage units might benefit from accessing the compression circuit of storage device 120 of FIG. 1 for other reasons, and so that functionality might be made available to the other devices even if not exposed to host processor 110 of FIG. 1. To support function-selective exposure to host processor 110 of FIG. 1, list of device configurations 1305 might include separate entries 1325 for each device/function combination (to separately indicate which functions are exposed or hidden), or might subdivide just functions 1315 and indicator 1320, but still grouped in a single entry 1325 for a single device.

It may be noted that functions 1315 shows three different functions identified as physical function 0: one for each device 1310. In some embodiments of the disclosure, each device may list its functions starting at function 0. When devices are directly accessed by host processor 110 of FIG. 1, there is no confusion regarding which function is being invoked: only the functions exposed by that device are considered and each function is typically uniquely identified. But when multi-function device 135 of FIG. 1 acts like a single device including the functionality of multiple devices, multi-function device 135 of FIG. 1 should not expose multiple functions all identified as "function 0": host processor 110 of FIG. 1 may not know which function triggers the desired functionality, and/or multi-function device 135 of FIG. 1 may not know which capability host processor 110 of FIG. 1 intended to trigger.

To resolve this concern, multi-function device 135 of FIG. 1 may expose unit function identifiers, and may internally map the functions exposed by multi-function device 135 of FIG. 1 to the functions exposed by the individual devices. For example, assuming that entries 1325-1, 1325-2, and 1325-3 all represent devices attached to multi-function device 135 of FIG. 1, multi-function device 135 may expose four functions to host processor 110 of FIG. 1: these four functions may map, respectively, to physical function 0 of device 0, physical function 1 of device 0, physical function 0 of device 1, and virtual function 0 of device 1. These functions may be assigned any desired function identifiers: in some embodiments of the disclosure such functions exposed by multi-function device 135 of FIG. 1 to host processor 110 of FIG. 1 may be assigned sequential numbers starting at 0. Thus, the functions managed by multi-function device 135 of FIG. 1 may map to the various device functions as shown in Table 2 below.

**Table 2: Function mapping**

| Device ID | Function ID | MFD function ID |
|---|---|---|
| 0 | PF 0 | PF 0 |
| 0 | PF 1 | PF 1 |
| 1 | PF 0 | PF 2 |
| 1 | VF 0 | PF 3 |
| 2 | PF 0 | PF 4 |

Thus, when multi-function device 135 of FIG. 1 receives a request involving, for example, its exposed function 3, multi-function device 135 of FIG. 1 may translate that request to trigger virtual function 0 of device ID 1, and may pass the request along to the appropriate bridge 335 or 340 of FIG. 3, or to bridge 1210 of FIG. 12. Note that in some embodiments of the disclosure, rather than translating the request itself, multi-function device 135 of FIG. 1 may leave it to bridges 335 or 340 of FIG. 3 or bridge 1210 of FIG. 12 to handle the mapping to the appropriate function of the device. Put another way, multi-function device 135 of FIG. 1 may determine which device includes the function host processor 110 of FIG. 1 intended to trigger, identify bridge 335 or 340 of FIG. 3 or bridge 1210 of FIG. 12 that leads to that device, and pass the request to that bridge, which may then map the function identified in the request appropriately.

Note that since device 2 is not exposed to host processor 110 of FIG. 1, multi-function device 135 of FIG. 1 need not expose a function to host processor 110 of FIG. 1 corresponding to physical function 0 of device 2, although such a function may be exposed to the other devices attached to multi-function device 135 of FIG. 1.

In some embodiments of the disclosure, the mapping of Table 2 may be used with requests received at multi-function device 135 from any source, be it a device "above" multi-function device 135 (such as host processor 110 of FIG. 1) or a device "below" multi-function device 135 (such as storage device 120 of FIG. 1 and/or computational storage unit 140 of FIG. 1). Put another way, the mapping of Table 2 may be used for any request, regardless of where the request originated. (In this context, "above" and "below" may be in the hierarchy of devices relative to, for example, host processor 110 of FIG. 1: host processor 110 of FIG. 1, along with any other devices that that are between host processor 110 of FIG. 1 and multi-function device 135, may be considered "above" multi-function device 135, whereas any devices that communicate with host processor 110 of FIG. 1 through multi-function device 135 may be considered "below" multi-function device 135.) In other embodiments of the disclosure, as the devices connected to multi-function device 135 may be aware of each other and may know what functions they each expose (to the extent the devices permit other devices to see them or their functions), devices connected to multi-function device 135 may use device identifiers and function identifiers exposed by the devices, rather than the functions exposed by multi-function device 135.

Storage 1215 may be any variety of storage. For example, storage 1215 may be a volatile storage, such as DRAM, or a non-volatile storage, such as flash memory. Some embodiments of the disclosure may use list of device configurations 1305 of FIG. 13 to determine what devices/controllers to expose to host processor 110 of FIG. 1: in such embodiments, multi-function device 135 may enumerate the attached devices to determine that all attached devices have configurations stored in list of device configurations 1305 of FIG. 13, and may then use the device configurations from list of device configurations 1305 of FIG. 13 to determine what devices/controllers to expose to host processor 110 of FIG. 1.

The fact that a particular device/controller might be hidden from host processor 110 of FIG. 1 should not be understood to suggest that the device/controller may not be exposed to host processor 110 of FIG. 1. In other words, multi-function device 135 of FIG. 1 may be capable of exposing the device/controller to host processor 110 of FIG. 1, but might choose to hide the device/controller because the device configuration indicates that the device/controller should be hidden from host processor 110 of FIG. 1.

FIG. 14 shows yet another embodiment of multi-function device 135 of FIG. 1, according to embodiments of the disclosure. In FIG. 14, multi-function device 135 is similar to multi-function device 135 as shown in FIG. 3. But multi-function device 135 of FIG. 14 also includes FHE circuit 1405. In FIG. 14, FHE circuit 1405 may be integrated into multi-function device 135. That is, instead of being connected to multi-function device via a connector, such as connectors 315 or 320, or connector 1205 of FIG. 12, FHE circuit 1405 may be implemented as part of multi-function device 135. By integrating FHE circuit 1405 with multi-function device 135, requests sent to FHE circuit 1405 may be handled more quickly. Multi-function device 135 may expose the functions of FHE circuit 1405 directly, so that the capabilities of FHE circuit 1405 may be triggered without need for mapping function identifiers. Integrating FHE circuit 1405 with multi-function device 135 also means that a bridge may be omitted: since communication with FHE circuit 1405 may be direct, FHE circuit 1405 may not need a bridge to handle communications with FHE circuit 1405. On the other hand, by integrating FHE circuit 1405 into multi-function device 135, FHE circuit 1405 might not be replaceable: if FHE circuit 1405 does not function correctly or is no longer needed, multi-function device 135 might need to be replaced entirely. FHE circuit 1405, like bridge 1210 of FIG. 12, may include connections to connector 305, bridges 335 and/or 340, and data processor 375, which are not shown for clarity in the drawing.

While FIG. 14 shows FHE circuit 1405 integrated into multi-function device 135, embodiments of the disclosure may include any desired computational storage unit (or even storage device) integrated into multi-function device 135. In addition, while FIG. 14 shows only one FHE circuit 1405 integrated into multi-function device 135, embodiments of the disclosure may integrate any number of devices into multi-function device 135, and the various devices integrated into multi-function device 135 may be the same or different devices. Finally, while FIG. 14 shows one connector 320 (and its corresponding bridge 340 and connections to connector 305, bridge 335, buffer 370, and data processor 375), embodiments of the disclosure may include any number (zero or more) devices attached to multi-function device 135 beyond connector 315 and FHE circuit 1405. In other words, multi-function device 135 might include only FHE circuit 1405 and one connector 315 for another device (such as storage device 120). But also, multi-function device might include two or more connectors 315 and 320 for connecting other devices like storage device 120 of FIG. 1 and computational storage unit 140 of FIG. 1 (meaning that multi-function device 135 might appear to include the functionalities of three or more devices).

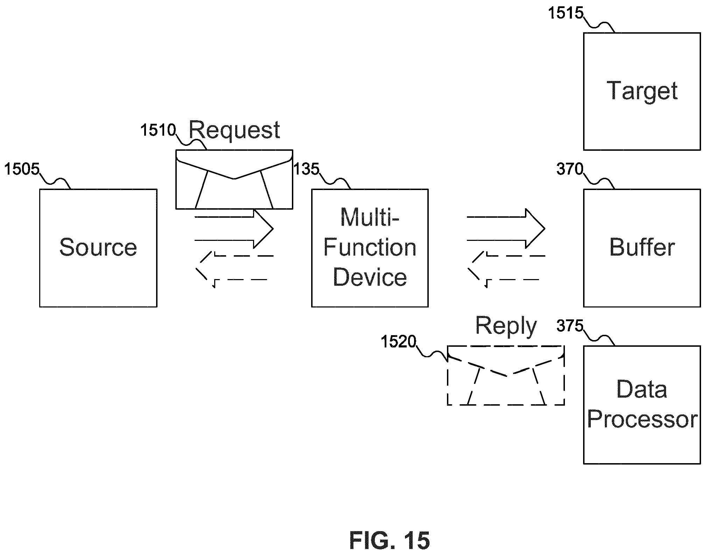

FIG. 15 shows multi-function device 135 of FIG. 1 receiving a request from a source and delivering the request to a target, according to embodiments of the disclosure. As discussed above, multi-function device 135 may be connected to host processor 110 of FIG. 1 and to various devices, such as storage device 120 of FIG. 1 and/or computational storage unit 140 of FIG. 1. For purposes of FIG. 15, source 1505 may be any component connected to multi-function device 135 that may send request 1510. Source 1505 may therefore include host processor 110 of FIG. 1, storage device 120 of FIG. 1, or computational storage unit 140 of FIG. 1 (which may include, for example, FHE circuit 1405 of FIG. 14). In a similar manner, target 1515 may be any component to which source 1505 might send request 1510. Target 1515 therefore might also include host processor 110 of FIG. 1, storage device 120 of FIG. 1, or computational storage unit 140 of FIG. 1 (which may include, for example, FHE circuit 1405 of FIG. 14). But since source 1505 would send request 1510 to target 1515, source 1510 might need to know that target 1515 exists. Therefore, for example, if source 1510 is host processor 110 of FIG. 1, target 1515 might not include any device connected to multi-function device 135 that is hidden from host processor 110 of FIG. 1. (Note that since devices connected to multi-function device 135 are not necessarily hidden from each other, target 1515 being hidden from host processor 1505 does not necessarily mean that other sources might not be able to send request 1510 to target 1515.) For purposes of this discussion, target 1515 may include either the device itself or bridges 335 or 340 of FIG. 3 or bridge 1210 of FIG. 12 (since multi-function device 135 might deliver the request to bridges 335 or 340 of FIG. 3 or bridge 1210 of FIG. 12 rather than to the device itself), with bridges 335 or 340 of FIG. 3 or bridge 1210 of FIG. 12 handling the delivery to the device). In addition, target 1415 may also include data processor 375 (since host processor 110 of FIG. 1 and/or devices connected to multi-function device 135 might request that data processor 375 process data in buffer 370).

But in some situations, while source 1505 might send request 1510 to target 1515, multi-function device 135 (or bridges 335 or 340 of FIG. 3 or bridge 1210 of FIG. 12) might redirect the request to another destination. For example, as discussed above, the devices connected to multi-function device 135 might view buffer 370 as part of memory 115 of FIG. 1, and not be aware that buffer 370 exists as a component within multi-function device 135. But if multi-function device 135 (or bridges 335 or 340 of FIG. 3 or bridge 1210 of FIG. 12) determine that request 1510 involves accessing an address that is part of the address range of buffer 370, multi-function device 135 (or bridges 335 or 340 of FIG. 3 or bridge 1210 of FIG. 12) may redirect the request to buffer 370 instead (or may process request 1510 themselves using buffer 370), based on the address of request 1510 being in the address range associated with buffer 370.

In some embodiments of the disclosure, target 1515, buffer 370, or data processor 375 might send reply 1520 back to source 1505. In such situations, reply 1520 may be delivered back to source 1520 by multi-function device 135.

Note that target 1515 might send reply 1520 even if target 1515 is integrated into multi-function device 135 of FIG. 1. For example, FHA circuit 1405 of FIG. 14 might send reply 1520 to source 1505. The fact that FHA circuit 1405 of FIG. 14, or any other component, might be integrated into multi-function device 135 of FIG. 1 does not mean that source 1505 knows when target 1515 completes its operation.

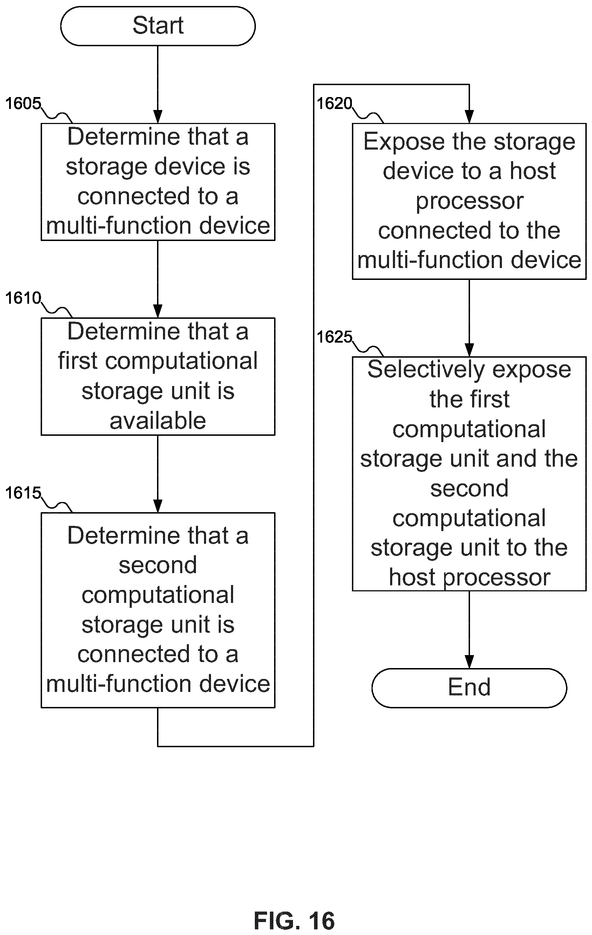

FIG. 16 shows a flowchart of an example procedure for exposing the devices attached to multi-function device 135 of FIG. 1 to the processor of FIG. 1, according to embodiments of the disclosure. In FIG. 16, at block 1605, multi-function device 135 of FIG. 1 may determine that storage device 120 of FIG. 1 is connected to multi-function device 135 of FIG. 1: for example, via connector 315 of FIG. 3. At block 1610, multi-function device 135 of FIG. 1 may determine that a first computational storage unit 140 of FIG. 1 is available. Note that in some embodiments of the disclosure, the first computational storage unit 140 of FIG. 1 may be FHE circuit 1405 of FIG. 14. At block 1615, multi-function device 135 of FIG. 1 may determine that a second computational storage unit 140 of FIG. 1 is connected to multi-function device 135 of FIG. 1: for example, via connector 320 of FIG. 3. Note that in some embodiments of the disclosure, the second computational storage unit 140 of FIG. 1 may be FHE circuit 1405 of FIG. 14.

At block 1620, multi-function device 135 of FIG. 1 may expose storage device 120 of FIG. 1 to host processor 110 of FIG. 1, which may also be connected to multi-function device 135 of FIG. 1: for example, via connector 305 of FIG. 3. At block 1625, multi-function device 135 of FIG. 1 may selectively expose the first and/or second computational storage units 140 of FIG. 1 to host processor 110 of FIG. 1. For example, configurations of either or both of computational storage units 140 of FIG. 1 may identify whether computational storage units 140 of FIG. 1 are to be exposed to host processor 110 of FIG. 1.

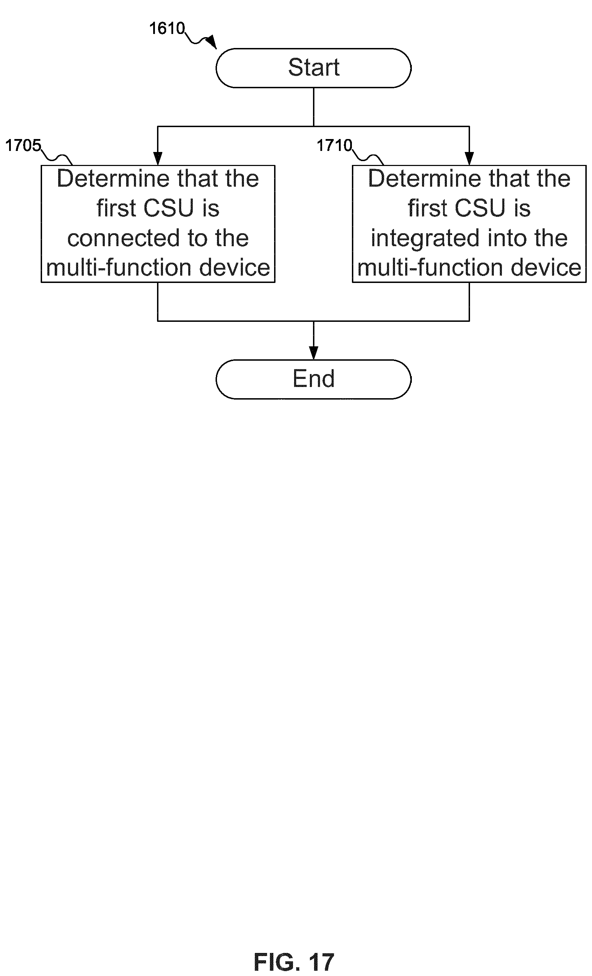

FIG. 17 shows a flowchart of an example procedure for multi-function device 135 of FIG. 1 to determine how a computational storage unit is available, according to embodiments of the disclosure. At block 1705, multi-function device 135 of FIG. 1 may determine that computational storage unit 140 of FIG. 1 is connected to multi-function device 135 of FIG. 1: for example, via connector 320 of FIG. 3 or connector 1205 of FIG. 12. Alternatively, at block 1710, multi-function device 135 of FIG. 1 may determine that computational storage unit 140 of FIG. 1 is integrated into multi-function device 135 of FIG. 1: for example, like FHE circuit 1405 of FIG. 14. These determinations may be done in any desired manner: for example, host processor 110 of FIG. 1 may identify itself to multi-function device 135 of FIG. 1 when enumerating the devices attached to host processor 110 of FIG. 1, and multi-function device 135 of FIG. 1 may determine the devices attached to it by enumerating those devices.

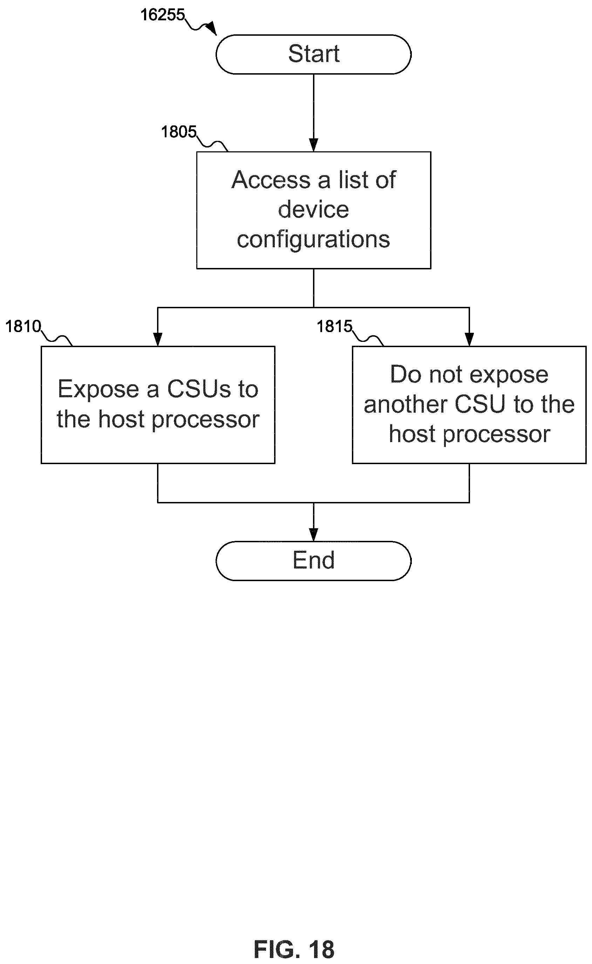

FIG. 18 shows a flowchart of an example procedure for multi-function device 135 of FIG. 1 to determine which devices to expose to the processor of FIG. 1, according to embodiments of the disclosure. At block 1805, multi-function device 135 of FIG. 1 may access list of device configurations 1305 of FIG. 13 from storage 1215 of FIG. 12. Multi-function device 135 of FIG. 1 may then identify entries 1325 of FIG. 13 that are for the devices connected to multi-function device 135 of FIG. 1. At block 1810, multi-function device 135 of FIG. 1 may expose a first computational storage unit 140 of FIG. 1 to host processor 110 of FIG. 1, whereas at block 1815, multi-function device 135 of FIG. 1 may not expose (*i.e.,* hide) a second computational storage unit 140 of FIG. 1 to host processor 110 of FIG. 1. For example, whether computational storage units 140 of FIG. 1 are exposed to host processor 110 of FIG. 1 may be determined by the configurations of computational storage units 140 of FIG. 1.

While FIG. 18 suggests blocks 1810 and 1815 are alternatives, blocks 1810 and 1815 are alternatives only with respect to a single computational storage unit (or other device), as a device may be either exposed to host processor 110 of FIG. 1 or hidden from host processor 110 of FIG. 1. But whether one device is exposed to host processor 110 of FIG. 1 or hidden from host processor 110 of FIG. 1 may be independent of whether any other device is exposed to or hidden from host processor 110 of FIG. 1. Similarly, whether one device indicates that a particular function may be hidden from or exposed to other devices may be independent of whether any other device decides to hide or expose its functions.

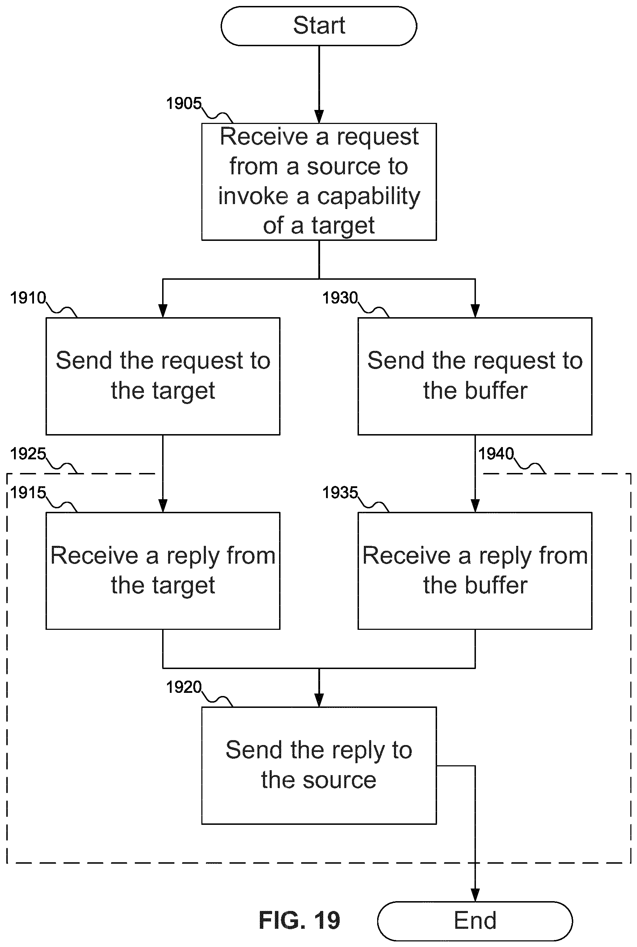

FIG. 19 shows a flowchart of an example procedure for multi-function device 135 of FIG. 1 to deliver messages between connected devices, according to embodiments of the disclosure. In FIG. 19, at block 1905, multi-function device 135 of FIG. 1 may receive request 1510 of FIG. 15 from source 1505 of FIG. 1. Source 1505 of FIG. 15 may be host processor 110 of FIG. 1, storage device 120 of FIG. 1, computational storage unit 140 of FIG. 1, data processor 375 of FIG. 3, FHE circuit 1405 of FIG. 14, or any other device that may be integrated with or connected to multi-function device 135 of FIG. 1. At block 1910, multi-function device 135 of FIG. 1 may send request 1510 of FIG. 15 to target 1515 of FIG. 15. Target 1515 of FIG. 15 may be host processor 110 of FIG. 1, storage device 120 of FIG. 1, computational storage unit 140 of FIG. 1, data processor 375 of FIG. 3, FHE circuit 1405 of FIG. 14, or any other device that may be integrated with or connected to multi-function device 135 of FIG. 1, with the proviso that source 1505 of FIG. 15 knows that target 1515 of FIG. 15 exists. So, for example, if source 1505 of FIG. 15 is host processor 110 of FIG. 1, target 1515 of FIG. 15 may be storage device 120 of FIG. 1, computational storage unit 140 of FIG. 1, data processor 375 of FIG. 3, or FHE circuit 1405 of FIG. 14 that was exposed to host processor 110 of FIG. 1 (in other words, target 1515 of FIG. 13 might not be a device that has been hidden from host processor 110 of FIG. 1).

At block 1915, multi-function device 135 of FIG. 1 may receive reply 1520 of FIG. 15 from target 1515 of FIG. 15. In that case, at block 1920, multi-function device 135 of FIG. 1 may send reply 1520 of FIG. 15 to source 1505 of FIG. 15. In situations where target 1515 of FIG. 15 does not send reply 1520 of FIG. 15, blocks 1910 and 1915 may be omitted, as shown by dashed line 1925.

While request 1510 of FIG. 15 might be sent to target 1515 of FIG. 15, in some situations request 1510 of FIG. 15 might involve reading, writing, or otherwise manipulating data in buffer 370 of FIG. 3. In such situations, request 1510 of FIG. 15 may be sent to buffer 370 of FIGs. 3, 12, and 14 instead of target 1515 of FIG. 15. Thus, at block 1930, request 1510 of FIG. 15 may be sent to buffer 370 of FIG. 3, and at block 1935 reply 1520 of FIG. 15 may be received from buffer 370 of FIG. 3, which may then be sent to source 1505 of FIG. 15 at block 1920. In situations where buffer 370 of FIG. 3 does not send reply 1520 of FIG. 15, blocks 1930 and 1935 may be omitted, as shown by dashed line 1940. Whether request 1510 of FIG. 15 is sent to target 1515 of FIG. 15 or buffer 370 of FIGs. 3, 12, and 14 may be determined based on data in request 1510 of FIG. 15: for example, an address associated with buffer 370 of FIGs. 3, 12, and 14.

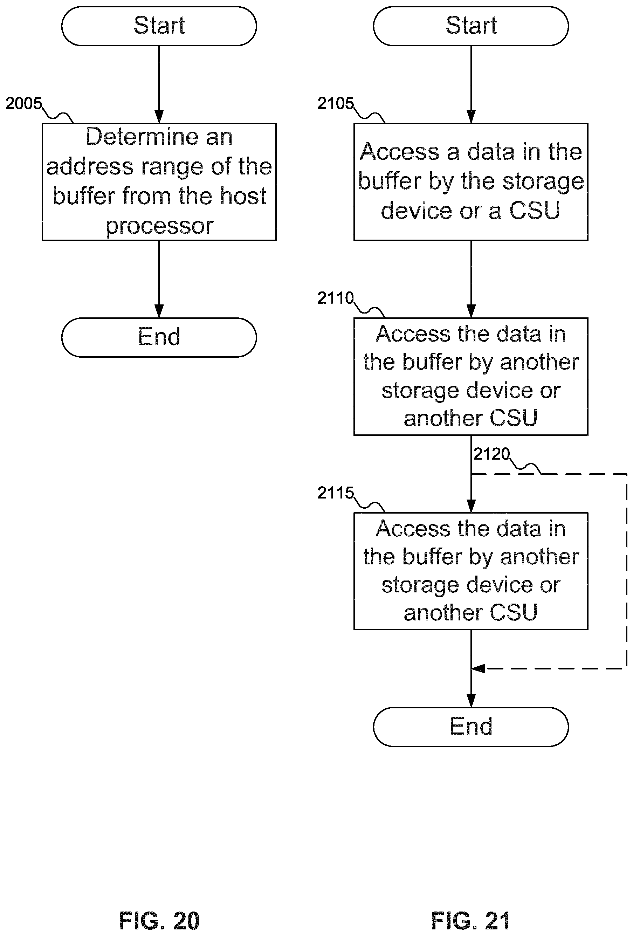

FIG. 20 shows a flowchart of an example procedure for multi-function device 135 of FIG. 1 to determine an address range of buffer 370 of FIGs. 3, 12, and 14 from the processor of FIG. 1, according to embodiments of the disclosure. At block 2005, host processor 110 of FIG. 1 may determine an address range for buffer 370 of FIGs. 3, 12, and 14, which may be provided to multi-function device 135 of FIG. 1. Multi-function device 135 of FIG. 1 may advertise to host processor 110 of FIG. 1 the capacity of buffer 370 of FIGs. 3, 12, and 14. So that host processor 110 of FIG. 1 may know how large an address range to assign to buffer 370 of FIGs. 3, 12, and 14.

FIG. 21 shows a flowchart of an example procedure for the devices attached to multi-function device 135 of FIG. 1 to access data from buffer 370 of FIGs. 3, 12, and 14, according to embodiments of the disclosure. In FIG. 21, at block 2105, a first storage device 120 of FIG. 1 or a first computational storage unit 140 of FIG. 1 (which may be, for example, FHE circuit 1405 of FIG. 14) may access data in buffer 370 of FIG. 3. At block 2110, a second storage device 120 of FIG. 1 or a second computational storage unit 140 of FIG. 1 (which may be, for example, FHE circuit 1405 of FIG. 14) may access data in buffer 370 of FIGs. 3, 12, and 14. At block 2115, a third storage device 120 of FIG. 1 or a third computational storage unit 140 of FIG. 1 (which may be, for example, FHE circuit 1405 of FIG. 14) may access data in buffer 370 of FIGs. 3, 12, and 14. If multi-function device 135 of FIG. 1 does not have third computational storage unit 140 of FIG. 1, then block 2115 may be omitted, as shown by dashed line 2120. Note that the device accessing data in buffer 370 of FIGs. 3, 12, and 14 in block 2110 may be the same type of device or a different type than the device accessing data in buffer 370 of FIGs. 3, 12, and 14 in block 2105. For example, storage device 120 of FIG. 1 might access buffer 370 of FIGs. 3, 12, and 14 in block 2105, whereas computational storage unit 140 of FIG. 1 might access buffer 370 of FIGs. 3, 12, and 14 in block 2110.

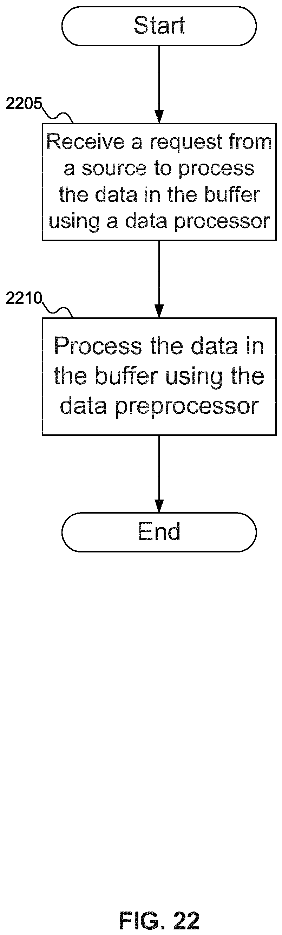

FIG. 22 shows a flowchart of an example procedure for data processor 375 of FIGs. 3, 12, and 14 to process data in buffer 370 of FIGs. 3, 12, and 14, according to embodiments of the disclosure. In FIG. 22, at block 2205, data processor 375 of FIG. 3 may receive a request to process data in buffer 370 of FIG. 3. This request may be received from host processor 110 of FIG. 1, storage device 120 of FIG. 1, computational storage unit 140 of FIG. 1 (which may be, for example, FHE circuit 1405 of FIG. 3), or any other device connected to multi-function device 135 of FIG. 1. This request may trigger an exposed function of data processor 375 of FIG. 3, or may trigger a function of multi-function device 135 of FIG. 1 that may, in turn, trigger a function of data processor 375 of FIG. 3 (for example, via a mapping of the function exposed by multi-function device 135 of FIG. 1 to the function exposed by data processor 375 of FIG. 3). At block 2210, data processor 375 may process the data in buffer 370 of FIG. 3 as instructed.

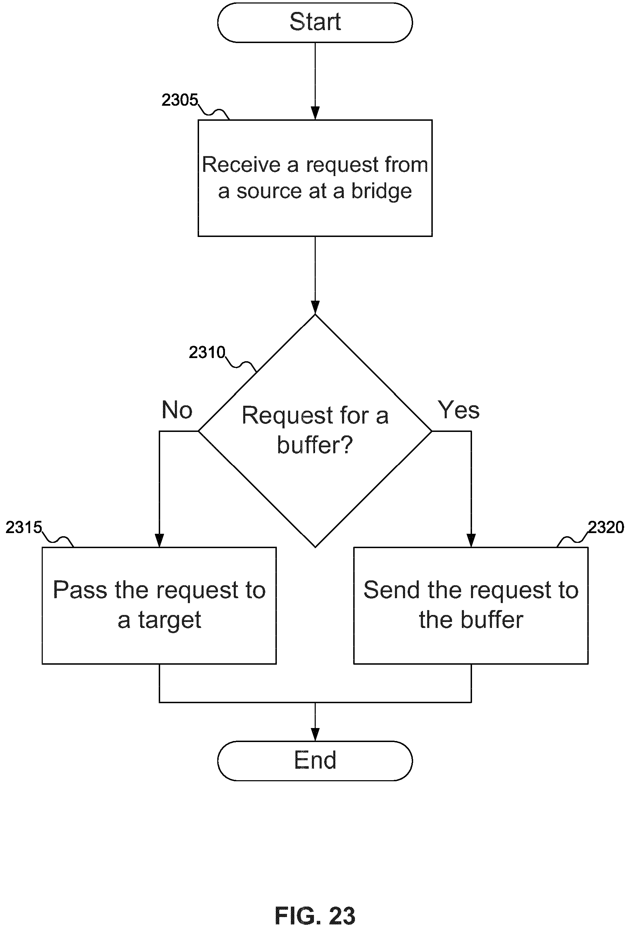

FIG. 23 shows a flowchart of an example procedure for multi-function device 135 of FIG. 1 to determine whether to deliver a request to target 1520 of FIG. 15 or to buffer 370 of FIGs. 3, 12, and 14, according to embodiments of the disclosure. In FIG. 23, at block 2305, multi-function device 135 of FIG. 1-more particularly, bridges 335 or 340 of FIG. 3 or bridge 1210 of FIG. 12-may receive request 1510 of FIG. 15. At block 2310, bridges 335 or 340 of FIG. 3 or bridge 1210 of FIG. 12 may determine if request 1510 of FIG. 15 should be directed to buffer 370 of FIG. 3: for example, if request 1510 of FIG. 15 includes an address in an address range associated with buffer 370 of FIG. 3. If request 1510 of FIG. 15 does not involve buffer 370 of FIG. 3, then at block 2315 bridges 335 or 340 of FIG. 3 or bridge 1210 of FIG. 12 may pass request 1510 of FIG. 15 to target 1515 of FIG. 15. Otherwise, at block 2320, bridges 335 or 340 of FIG. 3 or bridge 1210 of FIG. 12 may pass request 1510 of FIG. 15 to buffer 370 of FIG. 3.

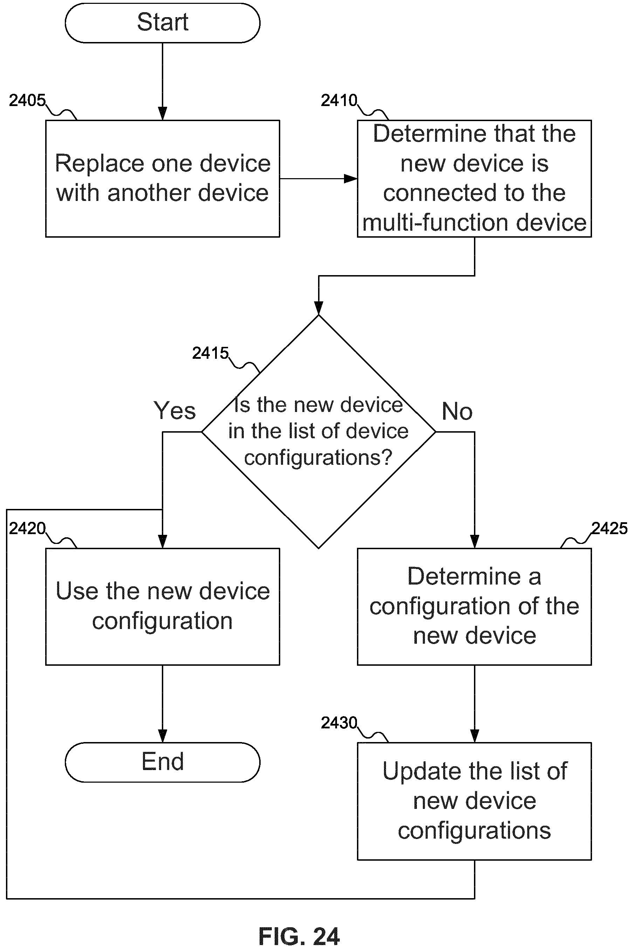

FIG. 24 shows a flowchart of an example procedure for multi-function device 135 of FIG. 1 to process a new device attached to multi-function device 135 of FIG. 1, according to embodiments of the disclosure. In FIG. 24, at block 2405, one device connected to multi-function device 135 of FIG. 1 may be replaced with a new device. This replacement may be performed, for example, by the customer using multi-function device 135 of FIG. 1. In some embodiments of the disclosure, this replacement may include hot-swapping the device for the new device; in other embodiments of the disclosure, replacement may involve turning off the power to multi-function device 135 of FIG. 1. At block 2410, multi-function device 135 of FIG. 1 may determine that the new device is connected to multi-function device 135 of FIG. 1.

At block 2415, multi-function device 135 of FIG. 1 may determine if list of device configurations 1305 of FIG. 13 includes entry 1325 of FIG. 13 for the new device. If so, then at block 2420, multi-function device 135 of FIG. 1 may use entry 1325 of FIG. 13 to configure the new device. Multi-function device 135 of FIG. 1 may use entry 1325 of FIG. 13 to determine what functions of the new device to expose (or not expose) to host processor 110 of FIG. 1. Otherwise, at block 2425, multi-function device 135 of FIG. 1 may determine a configuration for the new device (for example, by interrogating the new device for its configuration, or by prompting an administrator to determine the configuration for the new device) and at block 2430 multi-function device 135 of FIG. 1 may update list of device configurations 1305 of FIG. 13 with the configuration for the new device, after which multi-function device 135 of FIG. 1 may use the device configuration at block 2420.

In FIGs. 6-11B and 16-24, some embodiments of the disclosure are shown. But a person skilled in the art will recognize that other embodiments of the disclosure are also possible, by changing the order of the blocks, by omitting blocks, or by including links not shown in the drawings. All such variations of the flowcharts are considered to be embodiments of the disclosure, whether expressly described or not.

Embodiments of the disclosure may have a multi-function device that may support connections to storage devices and computational storage units. The multi-function device may present to the host processor a single device supporting all the functions of the individual storage devices and computational storage units. In addition, some devices may be hidden from the host processor, and used solely by other devices connected to the multi-function device. Embodiments of the disclosure offer a technical advantage by enabling customers to mix and match which storage devices and which computational storage units to combine as though they were a single device. Embodiments of the disclosure also offer a technical advantage by enabling one device to access functions of another device attached to the multi-function device.

Embodiments of the disclosure may also include a buffer in the multi-function device. The buffer may act as a shared memory accessible by some or all of the attached storage devices and/or computational storage units. Embodiments of the disclosure offer a technical advantage by avoiding the need to use the main memory to move data between storage devices and/or computational storage units, or to process data in the main memory.

Various embodiments of the present disclosure include systems and methods for integrating a storage device such as solid-state drive (SSD) and compute device in an integrated storage device. In some embodiments of the disclosure, a Non-Volatile Memory Express (NVMe) controller and Compute may be exposed to a host independently using separate Peripheral Component Interconnect Express (PCIe) functions including physical functions (PFs)/Virtual Functions (VFs). A peer-to-peer data path may be provided between a storage device and a compute device. The compute device and SSD may be connected using connectors to provide flexibility to change various compute types such as graphics processing units (GPUs), Tensor Processing Units (TPUs), network interface controllers (NICs), Field Programmable Gate Arrays (FPGAs), Application-Specific Integrated Circuits (ASIC), System-on-a-Chips (SoC).

In some embodiments of the disclosure, applications may include those such as social networks, Artificial Intelligence/ Machine Learning (AI/ML), Internet-of-things (IOT), and autonomous vehicles etc. which may generate large amounts of data. In some embodiments of the disclosure, such large datasets may require processing to generate monetarization from the datasets. In some embodiments, such processing may be expensive in terms of CPU cycles, memory bandwidth, energy spent. As such, some embodiments of the disclosure may process data near or inside a storage device to provide lower response latencies to the applications. Such near processing may also reduce energy consumption to move large data sets to and from a processor. Additionally, such near processing may enable distributed computing. As such, some embodiments of the disclosure may offload such application functions to a storage device and may minimize the compute resources needed, and hence may lower the cost of the database infrastructure including one or more of compute cycles, memory, network bandwidth, and energy consumed.

In some embodiments of the disclosure, one or more SSD Controllers and/or one or more Compute devices may be plugged/connected in the integrated storage device.

In some embodiments of the disclosure, the SSDs Controllers and/or Compute devices may be exposed to host in full or in part.

In some embodiments of the disclosure, subsets of SSD Controllers and/or Compute devices may not be exposed to the host and may be only internally.

In some embodiments of the disclosure, SSD Controllers and Compute devices may exposed using PCIe PF and/or VF.

In some embodiments of the disclosure, an FPGA performs a PCIe-PCIe bridging function, and host protocol pass-through.

In some embodiments of the disclosure, the SSD controllers and Compute devices may have their own device drivers and host software stack on the host that may access these device functions natively.

In some embodiments of the disclosure, SSD controllers and/or Compute devices may share peer-to-peer data buffer to exchange data being processed.

In some embodiments of the disclosure, one or more fixed compute devices such as a processor core may be used for certain pre-processing steps in FPGA.

In some embodiments of the disclosure, integrated devices may perform intelligent hosting directed device/function management such that those actions do not interfere with other SSD controllers and/or compute devices.

In some embodiments of the disclosure, SSD controllers and Compute devices may be pre-installed and configured in a flexible storage device.

In some embodiments of the disclosure, a flexible, integrated storage device may support a plug-and-play method of installing new computes into an existing flexible storage device.

Some embodiments of the disclosure may support integrating many different kinds of computes, such as TPU/GPU/FPGA/ASIC/SoC with SSD, for optimal data processing.

In some embodiments of the disclosure, different applications and use cases may benefit from cost and performance optimal computational storage solution.

Some embodiments of the disclosure may enable a broader set of applications customers.

Some embodiments of the disclosure may enable fewer product skews by having a base platform and different computes from partners.

Embodiments of the disclosure may include a proposed architecture for a flexible, integrated storage device that combines persistent storage and compute for optimal data processing. By processing data inside the storage device system, resource costs savings such as host bus bandwidth, host memory bandwidth, CPU cycles, energy spent in moving data may be achieved. Some embodiments of the disclosure may enable lower latencies as data processing may start sooner.

In some embodiments of the disclosure, a flexible and integrated storage device may be a processing element such as FPGA (or ASIC, SoC, etc.) and may be used to connect one or more SSD Controllers and/or one or more Compute resources to the host. In some embodiments of the disclosure, the SSD controllers and compute resources might be connected to such FPGA using connector so that different flavors could be connected as needed. In some embodiments of the disclosure, some of the SSD controllers and/or compute resources may be connected in a fixed manner if desirable.

One or more SSD controllers and one or more Compute resources may be exposed to the host through PCIe End Point (EP) Physical Functions (PF) or Virtual Functions (VF) in a transparent manner. The SSD controllers and compute resources may be connected to the FPGA using PCIe Root Port (RP). The FPGA logic may perform PCIe pass-through of the host and device interactions and host protocols. That is to say that a host system software stack such as SSD device drivers, compute drivers, and application frameworks may directly talk to the SSD controller and compute devices through the FPGA. In some embodiments, this facilitates easy integration of the proposed flexible storage device integration into existing application software stack.

In some embodiments of the disclosure, the number of PFs/VFs may match with the number of SSD Controllers and/or Computes exposed to the host. In some embodiments of the disclosure, the connected SSDs and Computes may be exposed or advertised to the host. In other embodiments of the disclosure, a subset of SSD controllers and/or computes may not be exposed to the host and may be used internally to the proposed storage device flexible storage device.

In some embodiments of the disclosure, a proposed flexible storage device may have other host interfaces such as one or more of Ethernet, TCP/IP, RDMA, NVMe-oF, UFS, eMMC, SAS, SATA, and so on in addition to or as an alternative to PCIe interfaces. Similarly, in some embodiments of the disclosure, the FPGA interface to the SSD Controller and Compute may have other protocols such as Ethernet, TCP/IP, RDMA, NVMe-oF, UFS, eMMC, SAS, SATA, and so on in addition to or as an alternative to PCIe interfaces. Although this disclosure uses examples with PCIe and NVMe as transport and host protocols for communication between host and flexible storage device, some embodiments of the disclosure may use other transports and host protocols to achieve optimal data processing operations in the proposed storage device.

In some embodiments of the disclosure, a PCIe bridge such as Light Weight Bridge (LWB) may forward the host PCIe packets and traffic to the SSD Controller and Compute resources attached to it with appropriate transactions if necessary. Similarly, in some embodiments of the disclosure, a PCIe bridge may forward the PCIe packets and traffic originating from SSD Controller and Compute device attached going to the host with appropriate translations if necessary.

In some embodiments of the disclosure, a flexible storage device may provide a peer-to-peer (P2P) data buffer that may be used to transfer data between SSD controller and compute device directly without sending it to the host memory. Such P2P data transfer may reduce the energy consumed, as well as the CPU cycles, the host memory bandwidth, and host bus bandwidth. Some embodiments of the disclosure may also enable a lower latency of data processing. In some embodiments of the disclosure, the P2P buffer may use on-chip SRAM, off-chip DRAM, or any other memory or combination of multiple memory elements.

In some embodiments of the disclosure, a flexible storage device may intercept any DMA transactions coming from an SSD controller and Compute device that fall in the P2P address range. The intercepted data transfer transactions may be re-directed to the P2P buffer instead of host memory. That is to say that SSD controller and/or Computes may be agnostic to the fact that some of their DMA transactions are automatically routed to the P2P buffer located in the storage device itself. From SSD Controller and Compute DMA point of view, they may just perform DMA operation using the memory addresses provided by their own device drivers. In some embodiments of the disclosure, no specific change or knowledge may be required by the SSD Controller and Compute device to participate in a P2P data transfer. As such, some embodiments of the disclosure may be very useful to enable usage of off-the-shelf SSD controllers and Compute devices into a flexible storage device to provide integrated solution with higher value.

In some embodiments of the disclosure, the P2P buffer may be accessed by SSD controllers using higher level protocols such as File Read or Write, and NVMe. In some embodiments of the disclosure, the P2P buffer may be accessed by the Compute devices using their own DMA engines under their own host device driver and software stack using any higher-level host protocols.

In some embodiments of the disclosure, a P2P buffer may be exposed to the host using a PCIe BAR mechanism. In some embodiments, the P2P buffer address range may be programmed or provided by the host into the flexible storage device. The method may be used by non PCIe host interfaces. In some embodiments of the disclosure, the P2P buffer address range available through BAR, or programming by host, or any other method may then be used by the FPGA to intercept the DMA transactions coming from the attached SSD Controllers and/or Compute resources.

In some embodiments of the disclosure, the P2P buffer may be shared between any number of devices connected to the FPGA including SSD controllers and Computes. That is to say that data may be exchanged between an SSD Controller and a compute device, a compute device and another compute device, an SSD controller and another SSD Controller, and/or any such combinations. In some embodiments of the disclosure, data may be shared or exchanged by one or more SSD Controllers or Computes to one or more SSD Controllers and/or compute devices. In another words, data exchange may be done in 1-to-1, many-to-1, or many-to-many manner. These forms of data exchange may be further described as unicast, or multicast, or broadcast type of data exchange.

In some embodiments of the disclosure, one or more SSD controllers may deposit data into the P2P buffer and then one or more Compute devices may operate or process that data by reading that data into their own local memory buffers.

In some embodiments of the disclosure, the FPGA may contain one or more processor cores or logic elements attached to the P2P buffer, to perform certain pre-processing data operations on the data contained in the P2P buffer itself. In some embodiments of the disclosure, such fixed, FPGA based pre-processing steps may be performed under device direction without host getting involved. In some embodiments of the disclosure, the FPGA based pro-processing steps may be performed under host direction. In some embodiments of the disclosure, the host may provide such instructions and orchestration using host bus interface to one or more PCIe functions.

In some embodiments of the disclosure, since multiple Compute functions and SSD controller functions may be exposed to the host, an integrated device may perform intelligent host directed device/function management such that those actions do not interfere with other SSD controllers and/or compute devices. Some examples of such device management functions are power management, reset, or interrupt settings.

In some embodiments of the disclosure, the flexible storage device, SSD controllers and Computes may be pre-installed and configured. In some embodiments of the disclosure, the flexible storage device supports plug-and-play method of installing new Computes and SSD controllers into an existing flexible storage device. In some embodiments of the disclosure, a FPGA uses local persistent memory to store configuration and capabilities of the SSD Controller and/or compute devices attached to it and may use local persistent memory to advertise devices attached to the FPGA to the host.

In some embodiments of the disclosure, after power-on, the logic in the FPGA may detect a newly connected device (SSD controller, and/or compute device) by checking the attached device identification information with its list of known device configurations stored in local persistent memory. If the device information does not match, the FPGA may read the host interface configuration and capabilities of the attached device and may store the read configuration and capability information in persistent memory. In other words, the FPGA may update its list of attached devices stored in local persistent memory. Then, on subsequent power-on events, the FPGA may use the host configuration and capability information stored in its local persistent memory to advertise configuration and capabilities matching a newly connected device. In this manner, a new compute device or SSD controller may be plugged into the flexible storage device base platform, and the storage device would automatically make it visible to the host.

Various embodiments of the disclosure include systems and methods for integrating a storage device such as Solid-State Drives (SSD) and Fully Homomorphic Encryption (FHE) acceleration engine in an integrated storage device. A Non-Volatile Memory Express (NVMe) controller and FHE acceleration engine may be exposed to the host independently using separate Peripheral Component Interconnect Express (PCIe) functions including physical functions (PFs)/ Virtual Functions (VFs). A peer-to-peer data path may be provided between storage and FHE compute.

In some embodiments of the disclosure, applications may include those such as social networks, Artificial Intelligence/ Machine Learning (AI/ML), Internet-of-things (IOT), and autonomous vehicles etc. which may generate large amounts of data. In some embodiments of the disclosure, such large datasets may require processing to generate monetarization from the datasets. In some embodiments of the disclosure, such processing may be expensive in terms of CPU cycles, memory bandwidth, energy spent. As such, some embodiments of the disclosure may process data near or inside a storage device to provide lower response latencies to the applications. Such near processing may also reduce energy consumption to move large data sets to and from a processor. Additionally, such near processing may enable distributed computing. As such, some embodiments of the disclosure may offload such application functions to a storage device and may minimize the compute resources needed, and hence may lower the cost of the database infrastructure including one or more of compute cycles, memory, network bandwidth, and energy consumed.

In some embodiments of the disclosure, one or more SSD Controllers and/or one or more FHE acceleration engines may be integrated in a storage device.

In some embodiments of the disclosure, off-the-shelf SSD controllers may be used to provide integrated solution.

In some embodiments of the disclosure, SSD controllers and FHE acceleration engine may have their own device drivers and host software stack on the host that may access these device functions natively.

In some embodiments of the disclosure, SSD controllers and/or FHE acceleration engines may share peer-to-peer data buffer to exchange data being processed.

In some embodiments of the disclosure, part of the P2P buffer may be reserved for FHE instructions as cache, or pre-fetch buffer.

In some embodiments of the disclosure, part of the P2P buffer may be reserved for input dataset as cache, or prefetch buffer.

In some embodiments of the disclosure, part of the P2P buffer may be reserved for intermediate results as cache or prefetch buffer.

In some embodiments of the disclosure, FHE processing may be performed on data stored in SSD efficiently, without moving it to the host memory.

In some embodiments of the disclosure, FHE processing instructions may be downloaded into the FHE engine quickly, resulting in lower latency.

In some embodiments of the disclosure, an off-the-shelf SSD may be used without re-spinning SSD controller.

In some embodiments of the disclosure, FHE acceleration may integrate into FHE framework and device driver smooth.

In embodiments of the disclosure, Fully Homomorphic Encryption (FHE) technology may be used to store sensitive data in encrypted form and then may process it for analytics without decrypting it. In some embodiments of the disclosure, this technology may enable secure data storage and processing without compromising confidentiality or misuse. A flexible, integrated storage device may combine persistent storage and an FHE acceleration engine. In some embodiments of the disclosure, by processing data inside the storage device system resource costs such as host bus bandwidth, host memory bandwidth, CPU cycles, energy spent in moving data may be achieved. In some embodiments of the disclosure, it also may enable lower latencies as data processing starts sooner.

In some embodiments of the disclosure, a flexible and integrated storage device may have a processing element such as a Field Programmable Gate Arrays (FPGA) (or Application-Specific Integrated Circuit (ASIC), or a System-on-a-Chip (SoC), etc.) used to connect one or more SSD Controllers and/or one or more Fully Homomorphic Encryption (FHE) processing engine to the host. The SSD controllers and FHE engine may be connected to FPGA using a connector so that different flavors or number of devices could be connected. In some embodiments of the disclosure, some of the SSD controllers and/or FHE engines may be connected in a fixed manner.

One or more SSD controllers and one or more FHE engines may be exposed to the host through PCIe End Point (EP) Physical Functions (PFs) or Virtual Functions (VFs) in a transparent manner. The FPGA logic may perform PCIe pass-through of the host and device interactions and host protocols. In other words, the FHE application and driver may communicate with FHE acceleration engine directly through the FPGA.

In some embodiments of the disclosure, a proposed flexible storage device with FHE acceleration engine may have other host interfaces such as one or more of Ethernet, TCP/IP, RDMA, NVMe-oF, UFS, eMMC, SAS, SATA, and so on in addition to or as an alternative to PCIe interfaces. Similarly, in some embodiments, the FPGA interface to the SSD Controller and Compute may have other protocols such as one or more of Ethernet, TCP/IP, RDMA, NVMe-oF, UFS, eMMC, SAS, SATA, and so on. Although this disclosure uses examples with PCIe and NVMe as transport and host protocols for communication between host and flexible storage device, some embodiments of the disclosure may use other transports and host protocols to achieve optimal data processing operations in the proposed storage device.

In some embodiments of the disclosure, the proposed flexible storage device FHE storage device may provide a peer-to-peer (P2P) data buffer that may be used to transfer data between SSD controller and FHE engine directly without sending it to the host memory. Such P2P data transfers may greatly reduce energy consumed, as well as CPU cycles, host memory bandwidth, and host bus bandwidth. In some embodiments of the disclosure, use of the P2P buffer may also enable lower latency of data processing. In some embodiments of the disclosure, the P2P buffer may use on-chip SRAM, off-chip DRAM, or any other memory or combination of multiple memory elements.

FHE processing instructions may be first downloaded into the FHE engine. In some embodiments of the disclosure, the FHE engine may receive DMA instructions from the host memory. In some embodiments of the disclosure, the FHE engine may receive DMA instructions from the P2P buffer in the integrated storage device. In some embodiments of the disclosure, the application and driver software may first read the instructions from SSD into the P2P buffer. In some embodiments of the disclosure, the system software may move instructions from host memory into the P2P buffer, and then may direct FHE engine to DMA instructions from P2P buffer.

In some embodiments of the disclosure, instructions kept in the P2P buffer may be kept there for future usage by reserving part of the P2P buffer for this purpose. That is to say that instructions kept in the P2P buffer may be cached there for subsequent usage. This may reduce latency of instruction loading into the FHE engine. In some embodiments of the disclosure, the system software may pre-fetch the desired instruction from SSD or host memory into the P2P buffer reserved for instructions.

In some embodiments of the disclosure, once the instructions are loaded into the FHE engine, input dataset may be provided to the engine for processing. In some embodiments of the disclosure, the input dataset may be present in host memory and FHE engine DMAs it from there through the FPGA in pass-through manner. In other embodiments of the disclosure, the input data set may be stored in the attached SSD and first may load it into the P2P buffer in the storage device. Such data loading may be done using higher level protocol such as File Read and NVMe Read commands to the attached SSD Controller. Once input data is DMA deposited into the P2P buffer by SSD Controller, application and/or system software may instruct the FHE engine to fetch that data for processing. At that point, the FHE engine may transfer data from P2P buffer into its local memory for processing.

In some embodiments of the disclosure, part of the P2P buffer may be reserved to store input data for future usage. In other words, P2P buffer may be used as cache or pre-fetch buffer for some of the processing inputs. Such caching and/or prefetching would reduce latency of data processing.

In some embodiments of the disclosure, once the FHE engine completes data processing, the completion may be conveyed to the application and system software through the FPGA in pass-through manner. At that point, application and/or system software may decide what to do with the FHE processing results. In some embodiments of the disclosure, the results may be transferred to the host memory using FHE engine DMA through the FPGA in pass-through manner. In some embodiments of the disclosure, the FHE processing results may be deposited into the P2P buffer for persistent storage in the attached SSD. Once results are transferred to P2P buffer, application and/or system software may instruct the SSD Controller to persist those results. That orchestration may be achieved using higher level protocol such as File Write and NVMe Write commands.

In some embodiments of the disclosure, part of the processing results may be kept in the P2P buffer for future usage. That is to say that part of the P2P buffer may be used as cache or prefetch buffer for intermediate results.

In some embodiments of the disclosure, a FHE engine may be integrated inside the FPGA instead of, or in addition to, connecting it externally. The other features mentioned earlier may apply to this integration method as well. An additional benefit of this integration method may be a reduced cost and reduction of power of devices. This method may also reduce overall latency of FHE operations as data may not need to cross the FPGA boundary or pass-through logic workbench (LWB) bridge logic.

The following discussion is intended to provide a brief, general description of a suitable machine or machines in which certain aspects of the disclosure may be implemented. The machine or machines may be controlled, at least in part, by input from conventional input devices, such as keyboards, mice, etc., as well as by directives received from another machine, interaction with a virtual reality (VR) environment, biometric feedback, or other input signal. As used herein, the term "machine" is intended to broadly encompass a single machine, a virtual machine, or a system of communicatively coupled machines, virtual machines, or devices operating together. Exemplary machines include computing devices such as personal computers, workstations, servers, portable computers, handheld devices, telephones, tablets, etc., as well as transportation devices, such as private or public transportation, e.g., automobiles, trains, cabs, etc.

The machine or machines may include embedded controllers, such as programmable or non-programmable logic devices or arrays, Application Specific Integrated Circuits (ASICs), embedded computers, smart cards, and the like. The machine or machines may utilize one or more connections to one or more remote machines, such as through a network interface, modem, or other communicative coupling. Machines may be interconnected by way of a physical and/or logical network, such as an intranet, the Internet, local area networks, wide area networks, etc. One skilled in the art will appreciate that network communication may utilize various wired and/or wireless short range or long range carriers and protocols, including radio frequency (RF), satellite, microwave, Institute of Electrical and Electronics Engineers (IEEE) 802.11, Bluetooth^{®}, optical, infrared, cable, laser, etc.

Embodiments of the present disclosure may be described by reference to or in conjunction with associated data including functions, procedures, data structures, application programs, etc. which when accessed by a machine results in the machine performing tasks or defining abstract data types or low-level hardware contexts. Associated data may be stored in, for example, the volatile and/or non-volatile memory, e.g., RAM, ROM, etc., or in other storage devices and their associated storage media, including hard-drives, floppy-disks, optical storage, tapes, flash memory, memory sticks, digital video disks, biological storage, etc. Associated data may be delivered over transmission environments, including the physical and/or logical network, in the form of packets, serial data, parallel data, propagated signals, etc., and may be used in a compressed or encrypted format. Associated data may be used in a distributed environment, and stored locally and/or remotely for machine access.

Embodiments of the disclosure may include a tangible, non-transitory machine-readable medium comprising instructions executable by one or more processors, the instructions comprising instructions to perform the elements of the disclosures as described herein.

The various operations of methods described above may be performed by any suitable means capable of performing the operations, such as various hardware and/or software component(s), circuits, and/or module(s). The software may comprise an ordered listing of executable instructions for implementing logical functions, and may be embodied in any "processor-readable medium" for use by or in connection with an instruction execution system, apparatus, or device, such as a single or multiple-core processor or processor-containing system.

The blocks or steps of a method or algorithm and functions described in connection with the embodiments disclosed herein may be embodied directly in hardware, in a software module executed by a processor, or in a combination of the two. If implemented in software, the functions may be stored on or transmitted over as one or more instructions or code on a tangible, non-transitory computer-readable medium. A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD ROM, or any other form of storage medium known in the art.

## Claims

1. A multi-function device (135), comprising:
a first connector for communicating with a storage device (120, 125, 505);
a second connector for communicating with a first computational storage unit (140);
a third connector for communicating with a second computational storage unit (140); and
a fourth connector for communicating with a host processor (110, 1505);
wherein the multi-function device (135) is configured to expose functions of the storage device (120, 125, 505) and of the first comnutati pal stora unit (140) to the host processor (110, 1505) via the fourth connector, and charactensed in:
the multi-function device (135) further comprising a buffer (325, 345, 350, 370) connected to the storage device (120, 125, 505), the first computational storage unit (140), and the second computational storage unit (140),
wherein the storage device (120, 125, 505), the first computational storage unit (140), and the second computational storage unit (140) are configured to access a data in the buffer (325, 345, 350, 370),
wherein:
the multi-function device further comprises:
a first bridge connecting the fourth connector and the first connector;
a second bridge connecting the fourth connector and the second connector; and
a third bridge connecting the fourth connector and the third connector; and the buffer is connected to the first bridge, the second bridge, and the third bridge; and
the first bridge, the second bridge, or the third bridge is configured to receive a request from the storage device, the first computational storage unit, or the second computational storage unit and to direct the request to the buffer.

2. The multi-function device (135) according to claim 1, wherein the storage device (120, 125, 505), the first computational storage unit (140), or the second computational storage unit (140) is configured to invoke a capability of the storage device (120, 125, 505), the first computational storage unit (140), or the second computational storage unit (140).

3. The multi-function device (135) according to claim 2, wherein the multi-function device (135) is configured to receive a request (1510) from the storage device (120, 125, 505), the first computational storage unit (140), or the second computational storage unit (140) and send the request (1510) to the storage device (120, 125, 505), the first computational storage unit (140), or the second computational storage unit (140).

4. The multi-function device (135) according to any one of claims 1 to 3, further comprising a data processor (375) connected to the buffer (325, 345, 350, 370), the data processor (375) configured to process a data in the buffer (325, 345, 350, 370).

5. The multi-function device (135) according to any one of claims 1 to 4, wherein:
the multi-function device (135) further comprises a storage (520, 1215) for a list of device configurations (1305), the list of device configurations (1305) including a first entry for the storage device (120, 125, 505), a second entry for the first computational storage unit (140), and a third entry for the second computational storage unit (140); and
the multi-function device (135) is configured to selectively expose the first computational storage unit (140) and the second computational storage unit (140) to the host processor (110, 1505) based at least in part on the list of device configurations (1305).

6. The multi-function device (135) according to claim 5, wherein the multi-function device (135) is configured to detect a device connected to at least one of the second connector or the third connector, determine a configuration (1305) of the device, and update the list of device configurations (1305) based at least in part on the configuration (1305) of the device.

7. A multi-function device (135), comprising:
a first connector for communicating with a storage device (120, 125, 505);
a first computational storage unit (140) integrated into the multi-function device (135);
a second connector for communicating with a second computational storage unit (140); and
a third connector for communicating with a host processor (110, 1505);
wherein the multi-function device (135) is configured to expose functions of the storage device (120, 125, 505) and of at least one of the first computational storage unit (140) or the second computational storage unit (140) to the host processor (110, 1505) via the third connector, and is **characterised in**:
further comprising a buffer (325, 345, 350, 370) connected to the storage device (120, 125, 505), the first computational storage unit (140), and the second computational storage unit (140),
wherein the storage device (120, 125, 505), the first computational storage unit (140), and the second computational storage unit (140) are configured to access a data in the buffer (325, 345, 350, 370),
wherein:
the multi-function device further comprises:
a first bridge connecting the third connector and the first connector; and
a second bridge connecting the third connector and the second connector; and
the buffer is connected to the first bridge, the second bridge, and the first computational storage unit; and
the first bridge or the second bridge is configured to receive a request from the storage device, the first computational storage unit, or the second computational storage unit and to direct the request to the buffer.

8. The multi-function device (135) according to claim 7, wherein the storage device (120, 125, 505), the first computational storage unit (140), or the second computational storage unit (140) is configured to invoke a capability of the storage device (120, 125, 505), the first computational storage unit (140), or the second computational storage unit (140).

9. The multi-function device (135) according to claim 7 or 8, further comprising a data processor (375) connected to the buffer (325, 345, 350, 370), the data processor (375) configured to process a data in the buffer (325, 345, 350, 370).

## Patentansprüche

1. Multifunktionsvorrichtung (135), aufweisend:
einen ersten Verbinder zur Kommunikation mit einer Speichervorrichtung (120, 125, 505);
einen zweiten Verbinder zur Kommunikation mit einer ersten Rechenspeichereinheit (140);
einen dritten Verbinder zur Kommunikation mit einer zweiten Rechenspeichereinheit (140); und
einen vierten Verbinder zur Kommunikation mit einem Hostprozessor (110, 1505);
wobei die Multifunktionsvorrichtung (135) so konfiguriert ist, dass sie Funktionen der Speichervorrichtung (120, 125, 505) und der ersten Rechenspeichereinheit (140) über den vierten Verbinder dem Hostprozessor (110, 1505) zugänglich macht,
**dadurch gekennzeichnet, dass**:
die Multifunktionsvorrichtung (135) ferner einen Pufferspeicher (325, 345, 350, 370) aufweist, der mit der Speichervorrichtung (120, 125, 505), der ersten Rechenspeichereinheit (140) und der zweiten Rechenspeichereinheit (140) verbunden ist,
wobei die Speichervorrichtung (120, 125, 505), die erste Rechenspeichereinheit (140) und die zweite Rechenspeichereinheit (140) so konfiguriert sind, dass sie auf Daten in dem Pufferspeicher (325, 345, 350, 370) zugreifen können,
wobei:
die Multifunktionsvorrichtung ferner aufweist:
eine erste Brücke, die den vierten Verbinder und den ersten Verbinder verbindet;
eine zweite Brücke, die den vierten Verbinder und den zweiten Verbinder verbindet; und
eine dritte Brücke, die den vierten Verbinder und den dritten Verbinder verbindet; und
wobei der Pufferspeicher mit der ersten Brücke, der zweiten Brücke und der dritten Brücke verbunden ist; und
die erste Brücke, die zweite Brücke oder die dritte Brücke so konfiguriert ist, dass sie eine Anforderung von der Speichervorrichtung, der ersten Rechenspeichereinheit oder der zweiten Rechenspeichereinheit empfängt und die Anforderung an den Pufferspeicher weiterleitet.

2. Multifunktionsvorrichtung (135) nach Anspruch 1, wobei die Speichervorrichtung (120, 125, 505), die erste Rechenspeichereinheit (140) oder die zweite Rechenspeichereinheit (140) so konfiguriert ist, dass sie eine Fähigkeit der Speichervorrichtung (120, 125, 505), der ersten Rechenspeichereinheit (140) oder der zweiten Rechenspeichereinheit (140) aktiviert.

3. Multifunktionsvorrichtung (135) nach Anspruch 2, wobei die Multifunktionsvorrichtung (135) so konfiguriert ist, dass sie eine Anforderung (1510) von der Speichervorrichtung (120, 125, 505), der ersten Rechenspeichereinheit (140) oder der zweiten Rechenspeichereinheit (140) empfängt und die Anforderung (1510) an die Speichervorrichtung (120, 125, 505), die erste Rechenspeichereinheit (140) oder die zweite Rechenspeichereinheit (140) sendet.

4. Multifunktionsvorrichtung (135) nach einem der Ansprüche 1 bis 3, ferner aufweisend einen Datenprozessor (375), der mit dem Pufferspeicher (325, 345, 350, 370) verbunden ist, wobei der Datenprozessor (375) so konfiguriert ist, dass er Daten in dem Pufferspeicher (325, 345, 350, 370) verarbeitet.

5. Multifunktionsvorrichtung (135) nach einem der Ansprüche 1 bis 4, wobei:
die Multifunktionsvorrichtung (135) ferner einen Speicher (520, 1215) für eine Liste von Vorrichtungskonfigurationen (1305) aufweist, wobei die Liste von Vorrichtungskonfigurationen (1305) einen ersten Eintrag für die Speichervorrichtung (120, 125, 505), einen zweiten Eintrag für die erste Rechenspeichereinheit (140) und einen dritten Eintrag für die zweite Rechenspeichereinheit (140) umfasst; und
die Multifunktionsvorrichtung (135) so konfiguriert ist, dass sie die erste Rechenspeichereinheit (140) und die zweite Rechenspeichereinheit (140), zumindest teilweise basierend auf der Liste von Vorrichtungskonfigurationen (1305), dem Hostprozessor (110, 1505) selektiv zugänglich macht.

6. Multifunktionsvorrichtung (135) nach Anspruch 5, wobei die Multifunktionsvorrichtung (135) so konfiguriert ist, dass sie eine Vorrichtung erkennt, die mit mindestens einem von dem zweiten Verbinder oder dem dritten Verbinder verbunden ist, eine Konfiguration (1305) der Vorrichtung bestimmt und die Liste der Vorrichtungskonfigurationen (1305) zumindest teilweise auf der Grundlage der Konfiguration (1305) der Vorrichtung aktualisiert.

7. Multifunktionsvorrichtung (135), aufweisend:
einen ersten Verbinder zur Kommunikation mit einer Speichervorrichtung (120, 125, 505);
eine erste Rechenspeichereinheit (140), die in die Multifunktionsvorrichtung (135) integriert ist;
einen zweiten Verbinder zur Kommunikation mit einer zweiten Rechenspeichereinheit (140); und
einen dritten Verbinder zur Kommunikation mit einem Hostprozessor (110, 1505);
wobei die Multifunktionsvorrichtung (135) so konfiguriert ist, dass sie Funktionen von der Speichervorrichtung (120, 125, 505) und von mindestens einer von der ersten Rechenspeichereinheit (140) oder der zweiten Rechenspeichereinheit (140) über den dritten Verbinder dem Hostprozessor (110, 1505) zugänglich macht,
**dadurch gekennzeichnet, dass** sie:
weiterhin einen Pufferspeicher (325, 345, 350, 370) aufweist, der mit der Speichervorrichtung (120, 125, 505), der ersten Rechenspeichereinheit (140) und der zweiten Rechenspeichereinheit (140) verbunden ist,
wobei die Speichervorrichtung (120, 125, 505), die erste Rechenspeichereinheit (140) und die zweite Rechenspeichereinheit (140) so konfiguriert sind, dass sie auf Daten in dem Pufferspeicher (325, 345, 350, 370) zugreifen können,
wobei:
die Multifunktionsvorrichtung ferner aufweist:
eine erste Brücke, die den dritten Verbinder und den ersten Verbinder verbindet; und
eine zweite Brücke, die den dritten Verbinder und den zweiten Verbinder verbindet; und
der Pufferspeicher mit der ersten Brücke, der zweiten Brücke und der ersten Rechenspeichereinheit verbunden ist; und
die erste Brücke oder die zweite Brücke so konfiguriert ist, dass sie eine Anforderung von der Speichervorrichtung, der ersten Rechenspeichereinheit oder der zweiten Rechenspeichereinheit empfängt und die Anforderung an den Puffer weiterleitet.

8. Multifunktionsvorrichtung (135) nach Anspruch 7, wobei die Speichervorrichtung (120, 125, 505), die erste Rechenspeichereinheit (140) oder die zweite Rechenspeichereinheit (140) so konfiguriert ist, dass sie eine Fähigkeit der Speichervorrichtung (120, 125, 505), der ersten Rechenspeichereinheit (140) oder der zweiten Rechenspeichereinheit (140) aktiviert.

9. Multifunktionsvorrichtung (135) nach Anspruch 7 oder 8, ferner aufweisend einen Datenprozessor (375), der mit dem Pufferspeicher (325, 345, 350, 370) verbunden ist, wobei der Datenprozessor (375) so konfiguriert ist, dass er Daten in dem Pufferspeicher (325, 345, 350, 370) verarbeitet.

## Revendications

1. Dispositif multifonction (135), comprenant :
un premier connecteur pour communiquer avec un dispositif de stockage (120, 125, 505) ;
un deuxième connecteur pour communiquer avec une première unité de stockage computationnel (140) ;
un troisième connecteur pour communiquer avec une deuxième unité de stockage computationnel (140) ; et
un quatrième connecteur pour communiquer avec un processeur hôte (110, 1505) ;
dans lequel le dispositif multifonction (135) est configuré pour exposer, au processeur hôte (110, 1505), via le quatrième connecteur, des fonctions du dispositif de stockage (120, 125, 505) et de la première unité de stockage computationnel (140), et est **caractérisé en ce que** :
le dispositif multifonction (135) comprend en outre une mémoire tampon (325, 345, 350, 370) connectée au dispositif de stockage (120, 125, 505), à la première unité de stockage computationnel (140) et à la deuxième unité de stockage computationnel (140),
dans lequel le dispositif de stockage (120, 125, 505), la première unité de stockage computationnel (140) et la deuxième unité de stockage computationnel (140) sont configurés pour accéder à des données dans la mémoire tampon (325, 345, 350, 370),
dans lequel :
le dispositif multifonction comprend en outre :
un premier pont reliant le quatrième connecteur et le premier connecteur ;
un deuxième pont reliant le quatrième connecteur et le deuxième connecteur ; et
un troisième pont reliant le quatrième connecteur et le troisième connecteur ; et
la mémoire tampon est connectée au premier pont, au deuxième pont et au troisième pont ; et
le premier pont, le deuxième pont ou le troisième pont est configuré pour recevoir une requête provenant du dispositif de stockage, de la première unité de stockage computationnel ou de la deuxième unité de stockage computationnel, et pour diriger la requête vers la mémoire tampon.

2. Dispositif multifonction (135) selon la revendication 1, dans lequel le dispositif de stockage (120, 125, 505), la première unité de stockage computationnel (140) ou la deuxième unité de stockage computationnel (140) est configuré pour invoquer une fonctionnalité du dispositif de stockage (120, 125, 505), de la première unité de stockage computationnel (140) ou de la deuxième unité de stockage computationnel (140).

3. Dispositif multifonction (135) selon la revendication 2, dans lequel le dispositif multifonction (135) est configuré pour recevoir une requête (1510) provenant du dispositif de stockage (120, 125, 505), de la première unité de stockage computationnel (140) ou de la deuxième unité de stockage computationnel (140) et transmettre la requête (1510) au dispositif de stockage (120, 125, 505), à la première unité de stockage computationnel (140) ou à la deuxième unité de stockage computationnel (140).

4. Dispositif multifonction (135) selon l'une quelconque des revendications 1 à 3, comprenant en outre une unité de traitement de données (375) connectée à la mémoire tampon (325, 345, 350, 370), l'unité de traitement de données (375) étant configurée pour traiter des données dans la mémoire tampon (325, 345, 350, 370).

5. Dispositif multifonction (135) selon l'une quelconque des revendications 1 à 4, dans lequel :
le dispositif multifonction (135) comprend en outre un stockage (520, 1215) pour une liste de configurations de dispositifs (1305), la liste de configurations de dispositifs (1305) comprenant une première entrée pour le dispositif de stockage (120, 125, 505), une deuxième entrée pour la première unité de stockage computationnel (140) et une troisième entrée pour la deuxième unité de stockage computationnel (140) ; et
le dispositif multifonction (135) est configuré pour exposer sélectivement la première unité de stockage computationnel (140) et la deuxième unité de stockage computationnel (140) au processeur hôte (110, 1505) sur la base au moins en partie de la liste de configurations de dispositifs (1305).

6. Dispositif multifonction (135) selon la revendication 5, dans lequel le dispositif multifonction (135) est configuré pour détecter un dispositif connecté à au moins l'un du deuxième connecteur ou du troisième connecteur, déterminer une configuration (1305) du dispositif et mettre à jour la liste de configurations de dispositifs (1305) sur la base au moins en partie de la configuration (1305) du dispositif.

7. Dispositif multifonction (135), comprenant :
un premier connecteur pour communiquer avec un dispositif de stockage (120, 125, 505) ;
une première unité de stockage computationnel (140) intégrée au dispositif multifonction (135) ;
un deuxième connecteur pour communiquer avec une deuxième unité de stockage computationnel (140) ; et
un troisième connecteur pour communiquer avec un processeur hôte (110, 1505) ;
dans lequel le dispositif multifonction (135) est configuré pour exposer, au processeur hôte (110, 1505), via le troisième connecteur, des fonctions du dispositif de stockage (120, 125, 505) et d'au moins l'une de la première unité de stockage computationnel (140) ou de la deuxième unité de stockage computationnel (140), et étant **caractérisé en ce que** :
le dispositif multifonction comprend en outre une mémoire tampon (325, 345, 350, 370) connectée au dispositif de stockage (120, 125, 505), à la première unité de stockage computationnel (140) et à la deuxième unité de stockage computationnel (140),
dans lequel le dispositif de stockage (120, 125, 505), la première unité de stockage computationnel (140) et la deuxième unité de stockage computationnel (140) sont configurés pour accéder à des données dans la mémoire tampon (325, 345, 350, 370),
dans lequel :
le dispositif multifonction comprend en outre :
un premier pont reliant le troisième connecteur et le premier connecteur ; et
un deuxième pont reliant le troisième connecteur et le deuxième connecteur ; et
la mémoire tampon est connectée au premier pont, au deuxième pont et à la première unité de stockage computationnel ; et
le premier pont ou le deuxième pont est configuré pour recevoir une requête provenant du dispositif de stockage, de la première unité de stockage computationnel ou de la deuxième unité de stockage computationnel, et pour diriger la requête vers la mémoire tampon.

8. Dispositif multifonction (135) selon la revendication 7, dans lequel le dispositif de stockage (120, 125, 505), la première unité de stockage computationnel (140) ou la deuxième unité de stockage computationnel (140) est configuré pour invoquer une fonctionnalité du dispositif de stockage (120, 125, 505), de la première unité de stockage computationnel (140) ou de la deuxième unité de stockage computationnel (140).

9. Dispositif multifonction (135) selon la revendication 7 ou 8, comprenant en outre une unité de traitement de données (375) connectée à la mémoire tampon (325, 345, 350, 370), l'unité de traitement de données (375) étant configurée pour traiter des données dans la mémoire tampon (325, 345, 350, 370).
